# EUROPEAN PATENT APPLICATION

(11) **EP 4 845 237 A1**
(43) Date of publication of application: **25.11.2026**
(21) Application number: 24917758.5
(22) Date of filing: 19.01.2024
(51) Int. Cl.: H04W 52/02

(54) **TRANSMISSION POWER CONTROL METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN); TANG, Hai, Dongguan, Guangdong 523860 (CN)
(74) Representative: Novagraaf Technologies
(86) International application number: PCT/CN2024/073168
(87) International publication number: WO 2025/152134

(57) **Abstract**

The present application relates to the technical field of Internet of Things, and discloses a transmission power control method and apparatus, a device, and a storage medium. The method comprises: determining transmission power on the basis of a first power control parameter, the transmission power being the power used when transmitting at least one of a carrier, data, or a signal to an Internet of Things device. On the one hand, the performance of the first intermediate node in transmitting at least one of a carrier, data, or a signal to the Internet of Things device can be ensured; on the other hand, controlling the transmission power helps reduce the interference of the first intermediate node to other data transmissions when transmitting at least one of a carrier, data, or a signal.

## Description

### TECHNICAL FIELD

The embodiments of the present disclosure relate to the field of the Internet of things (IoT), and particularly to methods and apparatuses for controlling transmit power, devices, and storage medium.

### RELATED ART

In IoT technology, when the distance between network devices and IoT devices is relatively long, the network devices can achieve communication and transmission between themselves and the IoT devices through intermediate nodes. For example, bidirectional communication occurs between the network devices and the intermediate nodes, and bidirectional communication also occurs between the intermediate nodes and the IoT devices.

When an intermediate node transmits at least one of carrier waves, data, or signals to an IoT device, how to control the transmit power of the intermediate node is an unresolved technical problem.

### SUMMARY

Embodiments of the present disclosure provide methods and apparatuses for controlling transmit power, devices, and storage medium. The technical solutions are as follows.

In an aspect, embodiments of the present disclosure provide a method for controlling transmit power. The method is performed by a first intermediate node and includes: determining transmit power based on a first power control parameter, wherein the transmit power is power used when transmitting at least one of a carrier wave, data, or a signal to an IoT device.

In another aspect, embodiments of the present disclosure provide a method for controlling transmit power. The method is performed by a network device and includes: transmitting a first power control parameter, wherein the first power control parameter is used to instruct a first intermediate node to determine transmit power, wherein the transmit power is power used when the first intermediate node transmits at least one of a carrier wave, data, or a signal to an IoT device.

In another aspect, embodiments of the present disclosure provide a method for controlling transmit power. The method is performed by a second intermediate node and includes: transmitting a second power control parameter, wherein the second power control parameter is used to determine transmit power of a first intermediate node together with a first power control parameter, or the second power control parameter is used to adjust transmit power determined based on a first power control parameter; wherein the transmit power is power used when the first intermediate node transmits at least one of a carrier wave, data, or a signal to an IoT device.

In another aspect, embodiments of the present disclosure provide an apparatus for controlling transmit power. The apparatus includes: a determining module, configured to determine transmit power based on a first power control parameter, wherein the transmit power is power used when transmitting at least one of a carrier wave, data, or a signal to an IoT device.

In another aspect, embodiments of the present disclosure provide an apparatus for controlling transmit power. The apparatus includes: a transmitting module, configured to transmit a first power control parameter, wherein the first power control parameter is used to instruct a first intermediate node to determine transmit power, wherein the transmit power is power used when the first intermediate node transmits at least one of a carrier wave, data, or a signal to an IoT device.

In another aspect, embodiments of the present disclosure provide an apparatus for controlling transmit power. The apparatus includes:: a transmitting module, configured to transmit a second power control parameter, wherein the second power control parameter is used to determine transmit power of a first intermediate node together with a first power control parameter, or the second power control parameter is used to adjust transmit power determined based on a first power control parameter; wherein the transmit power is power used when the first intermediate node transmits at least one of a carrier wave, data, or a signal to an IoT device.

In another aspect, embodiments of the present disclosure provide a terminal device. The terminal device includes a processor; wherein the processor is configured to determine transmit power based on a first power control parameter, wherein the transmit power is power used when transmitting at least one of a carrier wave, data, or a signal to an IoT device.

In another aspect, embodiments of the present disclosure provide a terminal device. The terminal device includes a processor and a transceiver connected to the processor; wherein the transceiver is configured to transmit a second power control parameter, wherein the second power control parameter is used to determine transmit power of a first intermediate node together with a first power control parameter, or the second power control parameter is used to adjust transmit power determined based on a first power control parameter; wherein the transmit power is power used when the first intermediate node transmits at least one of a carrier wave, data, or a signal to an IoT device.

In another aspect, embodiments of the present disclosure provide a network device. The network device includes a processor and a transceiver connected to the processor; wherein the transceiver is configured to transmit a first power control parameter, wherein the first power control parameter is used to instruct a first intermediate node to determine transmit power, wherein the transmit power is power used when the first intermediate node transmits at least one of a carrier wave, data, or a signal to an IoT device.

In another aspect, embodiments of the present disclosure provide a computer-readable storage medium. One or more computer programs are stored in the storage medium, and are run by a processor to perform the aforementioned method for controlling transmit power.

In another aspect, embodiments of the present disclosure provide a chip. The chip includes programmable logic circuitry and/or one or more program instructions, the chip, when operating on a terminal or network device, is configured to perform the aforementioned method for controlling transmit power.

In another aspect, embodiments of the present disclosure provide a computer program product. The computer program product includes one or more computer instructions stored in a computer-readable storage medium; and a processor of a communication device reads the one or more computer instructions from the computer-readable storage medium and executes them, such that the communication device performs the aforementioned method for controlling transmit power.

In another aspect, embodiments of the present disclosure provide a computer program. The computer program is run by a processor of a communication device to perform the aforementioned method for controlling transmit power.

The technical solutions provided in the embodiments of the present disclosure may include the following beneficial effects.

Based on the first power control parameter, the transmit power used when the first intermediate node transmits at least one of the carrier wave, the data, or the signal to the IoT device is determined. On the one hand, this ensures the performance of the first intermediate node in transmitting at least one of the carrier wave, the data, or the signal to the IoT device. On the other hand, controlling the transmit power helps reduce the interference of the first intermediate node on other data transmissions when transmitting at least one of the carrier wave, the data, or the signal.

### BRIEF DESCRIPTION OF DRAWINGS

FIG. 1 illustrates a schematic diagram of a communication system according to related technology;
FIG. 2 shows a schematic diagram of a communication system according to related technology;
FIG. 3 shows a flowchart of a method for controlling transmit power according to some embodiments of the present disclosure;
FIG. 4 illustrates a schematic diagram of a method for controlling transmit power according to some embodiments of the present disclosure;
FIG. 5 illustrates a schematic diagram of a method for controlling transmit power according to some embodiments of the present disclosure;
FIG. 6 illustrates a schematic diagram of a method for controlling transmit power according to some embodiments of the present disclosure;
FIG. 7 illustrates a schematic diagram of a method for controlling transmit power according to some embodiments of the present disclosure;
FIG. 8 illustrates a schematic diagram of a method for controlling transmit power according to some embodiments of the present disclosure;
FIG. 9 illustrates a schematic diagram of a block number in a power control command according to some embodiments of the present disclosure;
FIG. 10 illustrates a flowchart of a method for controlling transmit power according to some embodiments of the present disclosure;
FIG. 11 illustrates a schematic diagram of a method for controlling transmit power according to some embodiments of the present disclosure;
FIG. 12 illustrates a flowchart of a method for controlling transmit power according to some embodiments of the present disclosure;
FIG. 13 illustrates a flowchart of a method for controlling transmit power according to some embodiments of the present disclosure;
FIG. 14 illustrates a structural block diagram of an apparatus for controlling transmit power according to some embodiments of the present disclosure;
FIG. 15 illustrates a structural block diagram of an apparatus for controlling transmit power according to some embodiments of the present disclosure;
FIG. 16 illustrates a structural block diagram of an apparatus for controlling transmit power according to some embodiments of the present disclosure; and
FIG. 17 illustrates a schematic structural diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Here, exemplary embodiments will be described in detail, with examples illustrated in the accompanying drawings. When the following description refers to the drawings, unless otherwise indicated, the same numerals in different drawings represent the same or similar elements. The implementations described in the following exemplary embodiments do not represent all implementations consistent with the present disclosure. Instead, they are merely examples of devices and methods consistent with some aspects of the present disclosure as detailed in the accompanying claims. For embodiments in the present disclosure, all other embodiments obtained by those of ordinary skill in the art without creative effort fall within the scope of protection of the present disclosure. The terms used in the present disclosure are solely for the purpose of describing specific embodiments and are not intended to limit the present disclosure. The singular forms of "a", "the", and "this" used in the present disclosure and the accompanying claims are also intended to include the plural form, unless the context clearly indicates otherwise. It should also be understood that the term "and/or" used in this document refers to and includes any or all possible combinations of one or more associated listed items. It should be appreciated that although the present disclosure may use terms such as first, second, third, etc. to describe various information, such information should not be limited to these terms. These terms are only used to distinguish one type of information from another. For example, without departing from the scope of the present disclosure, first information may also be referred to as second information, and similarly, second information may also be referred to as first information. Depending on the context, the word "if" as used herein may be interpreted as "when" or "in response to determining".

Firstly, the relevant technologies involved in the embodiments of the present disclosure are introduced.

### Classification of zero-power devices

Based on the energy source and usage method of zero-power devices, they may be classified into the following types.

### (1) Passive zero-power device

The zero-power device does not require an internal power supply. When the zero-power device approaches the network device, it falls within the near-field range formed by the antenna radiation of the network device. As an example, the network device is a reader/writer of a radio frequency identification (RFID) system. Therefore, the antenna of the zero-power device generates induced current through electromagnetic induction, and the induced current drives the low-power chip circuitry of the zero-power device. This enables demodulation of forward link signals and modulation of backward link signals. For the backscatter link, the zero-power device may use backscatter or extremely low-power active transmission methods for signal transmission. The passive zero-power device does not require an internal power supply to drive either the forward link or the backward link, making it a true zero-power device. The passive zero-power device does not require a power supply, and its radio frequency (RF) circuits and baseband circuits are very simple, such as not requiring components like a low noise amplifier (LNA), power amplifier (PA), crystal oscillator, or analog to digital converter (ADC). They have many advantages, such as small size, light weight, very low cost, and long service life.

### (2) Semi-passive zero-power device

The semi-passive zero-power device does not have its own power supply and may use a radio frequency power harvesting module to harvest radio wave energy, which is then stored in an energy storage unit, illustratively a capacitor. After obtaining energy, the energy storage unit may drive the low-power chip circuitry of the zero-power device to perform tasks such as demodulating forward link signals and modulating backward link signals. For the backscatter link, the zero-power device may use backscatter or extremely low-power active transmission methods for signal transmission.

The semi-passive zero-power device does not require an internal power supply to drive either the forward link or the reverse link. The energy stored in the capacitor used during operation comes from the radio energy harvested by the radio frequency power harvesting module, making it a true zero-power device. The semi-passive zero-power device inherits many advantages of the passive zero-power device, such as small size, light weight, very low price, and long service life.

### (3) Active zero-power device

In some scenarios, the zero-power device used may also be an active zero-power device, which may have a built-in power supply. The power supply is used to drive the low-power chip circuitry of the zero-power device, enabling demodulation of forward link signals and modulation of backward link signals. However, for the backscatter link, the zero-power device may use backscatter or extremely low-power active transmission methods for signal transmission. Therefore, the zero-power feature of the active zero-power device is mainly reflected in the fact that the signal transmission in the backward link does not require the zero-power device to consume its own power, but instead uses backscatter. In the active zero-power device, the built-in power supply supplies power to the chip, increasing the read and write distance of the tag and improving the reliability of communication. Therefore, it is applied in scenarios where there are relatively high requirements for communication distance and read latency.

### Cellular Internet of things

The cellular IoT is booming. For example, the 3rd Generation Partnership Project (3GPP) has standardized IoT technologies such as narrow band-IoT (NB-IoT), machine-type communications (MTC), and RedCap. However, the IoT communication needs cannot be met yet in many scenarios, such as harsh communication environment, demand for extremely small-sized terminal form factors, and the demand for extremely low-cost IoT communication.

### Harsh communication environment

In certain IoT scenarios, devices may encounter extreme environments such as high temperatures, low temperatures, high humidity, high pressure, high radiation, or high-speed motion. Examples include ultra-high voltage substations, monitoring of high-speed train tracks, environmental monitoring in frigid regions, and industrial production lines. In these scenarios, IoT terminal devices will be unable to operate due to the limitations of the conventional power supply. Furthermore, extreme working environments are also not conducive to the maintenance of IoT terminal devices, such as replacing the power supply.

### Demand for extremely small-sized terminal form factors

In certain IoT communication scenarios, such as food traceability, commodity circulation, and smart wearables, terminals are required to have an extremely small size to facilitate use in these scenarios. For instance, IoT terminal devices used for commodity management in the circulation process typically are embedded in the form of electronic tags in a very compact manner into commodity packaging. Another example is lightweight wearable IoT terminal devices, which can enhance user experience while meeting user needs.

### The demand for extremely low-cost IoT communication

Numerous IoT communication scenarios require IoT terminal devices to be cost-effective, thereby enhancing their competitiveness compared to other alternative technologies. For instance, in logistics or warehousing scenarios, to facilitate the management of a large number of circulating items, IoT terminal devices may be attached to each item, enabling precise management of the entire logistics process and cycle through communication between the IoT terminal device and the logistics network. These scenarios demand that the price of IoT terminal devices be competitive enough.

Therefore, in order to cover these unmet IoT communication needs, the ultra-low-cost, extremely small-sized, power-free/maintenance-free IoT also needs to be developed in cellular IoT. Zero-power IoT devices can precisely meet these requirements.

Zero-power IoT, also known as Ambient IoT or passive IoT, refers to IoT devices that harness various environmental energies, such as radio frequency energy, light energy, solar energy, thermal energy, mechanical energy, and other environmental energies, to power themselves. These devices may have no energy storage capacity or very limited energy storage capacity (such as using capacitors with a capacity of tens of microfarads). Compared to existing IoT devices, Ambient IoT devices offer numerous advantages, including no power supply, maintenance-free operation, small size, low complexity and cost, and long lifespan.

Zero-power IoT can be applied to at least the following four types of scenarios.
(1) Object recognition, such as logistics, management of products on the production line, and supply chain management.
(2) Environmental monitoring, such as monitoring of temperature, humidity, and harmful gases in the working environment and natural environment.
(3) Positioning, such as indoor positioning, smart item search, and production line item positioning.
(4) Intelligent control, such as the intelligent control of various electrical appliances in smart homes (switching on/off air conditioning, adjusting temperature), and the intelligent control of various facilities in agricultural greenhouses (automatic watering, fertilization).

### Ambient IoT devices based on ambient energy

In the new radio (NR) system and Wireless Fidelity (Wi-Fi) system, the power-free and low-cost nature of devices may support the low-cost and large-scale deployment and maintenance-free of IoT devices. Currently, standards are being researched on how to support IoT devices based on ambient energy in NR systems and Wi-Fi systems, known as Ambient IoT devices. The energy required for their operation comes from ambient energy harvesting, which may be sourced from wireless signals, solar energy, thermal energy, etc. Such devices are similar to passive or semi-passive devices in zero-power communication.

A research project on Ambient IoT devices has been conducted in the radio access network (RAN) of 3GPP, which broadly categorizes Ambient IoT devices into three types: Device A, Device B, and Device C, each possessing corresponding levels of complexity and communication capabilities.
Device A: It does not have energy storage capability and cannot transmit signals independently, thus it adopts the backscatter transmission method;
Device B: It possesses energy storage capability but cannot transmit signals independently. Specifically, it employs the backscatter transmission method that utilizes stored energy to amplify the backscatter signal; and
Device C: It possesses energy storage capability, and cannot transmit signals independently, that is, it possesses active transmission capability.

Device A has the lowest complexity and power consumption, with power consumption as low as 1 µW, but its communication distance is limited, generally only a few meters. Device A requires the network device to provide carrier signals for backscattering transmission. Device C generally has a large-capacity capacitor to store energy from the environment, with power consumption capable of supporting hundreds of µW, allowing for active signal transmission and a longer communication distance. Since Device C can perform active transmission, it does not require the network device to provide carrier signals. Device B has a complexity and power consumption between those of Device A and Device C.

### Power control of the physical uplink control channel (PUCCH) in NR

In the NR Uu interface, the transmit power of the PUCCH is determined by the following formula: $\begin{matrix}{P}_{PUCCH , b , f , c} \left(i{, q}_{u},{q}_{d},l\right) = \\ min \left\{\begin{matrix}{P}_{CMAX , f , c} \left(i\right) , \\ {P}_{O_PUCCH , b , f , c} \left({q}_{u}\right) + 10 {log}_{10} \left({2}^{μ}⋅{M}_{RB , b , f , c}^{PUCCH}\left(i\right)\right) + {PL}_{b , f , c} \left({q}_{d}\right) \\ + {Δ}_{F_PUCCH} \left(F\right) + {Δ}_{TF , b , f , c} \left(i\right) + {g}_{b , f , c} \left(i, l\right)\end{matrix}\right\} .\end{matrix}$
i is the PUCCH index, P_{CMAX,f,c}(i) is the maximum transmit power of the terminal device in the serving cell c of the carrier wave f; b is the band width part (BWP) index; P_{O_PUCCH,b,f,c}(qᵤ) is the target receive power; ${M}_{RB , b , f , c}^{PUCCH} \left(i\right)$ is the transmission bandwidth of the PUCCH; PL_{b,f,c}(q_{d}) is the path loss value measured based on the path loss reference signal q_{d}; Δ_{F_PUCCH}(F) is the adjustment value related to the PUCCH format; Δ_{TF,b,f,c}(i) is the compensation factor related to the PUCCH code rate; and g_{b,f,c}(i, l) is the closed-loop power control adjustment state used in closed-loop power control.

Specifically, P_{O_PUCCH,b,f,c}(qᵤ) = P_{O_NOMINAL_PUCCH} + P_{O_UE_PUCCH}(qᵤ). P_{O_NOMINAL_PUCCH} is a configuration parameter (not configured as 0) for the radio resource control (RRC) layer. P_{O_UE_PUCCH}(qᵤ) is a parameter determined based on PUCCH-SpatialRelationInfo indicated by the PUCCH spatial-related information. For the path loss measurement reference signal q_{d}, if pathlossReferenceRSs is not configured, the synchronizing signal block (SSB) carrying the master indication block (MIB) is used as q_{d}. If pathlossReferenceRSs is configured, the reference signal in the PUCCH-PathlossReferenceRS indexed by the PUCCHPathlossReferenceRS-Id in the PUCCH-SpatialRelationInfo is used as q_{d}. If there is no spatial-related information indicated in the PUCCH, the reference signal with an index of 0 in the PUCCH-PathlossReferenceRS is used as q_{d}.

The closed-loop power control adjustment state g_{b,f,c}(i, l) = g_{b,f,c}(i - i₀, l) + ${\sum }_{m = 0}^{C \left({C}_{i}\right) - 1} {δ}_{PUCCH , b , f , c} \left(m, l\right)$. *l* ∈ {0,1} represents the power control process index, and is determined based on the closedLoopIndex in the PUCCH spatial related information PUCCH-SpatialRelationInfo. If there is no PUCCH spatial indication information, then *l* = 0. C(Cᵢ) represents the number of power control commands received by the terminal within a specific range, and the value of C(Cᵢ) is defined by the standard. δ_{PUCCH,b,f,c}(m, l) represents the power adjustment value indicated in the m-th power control command for power process l. If the current transmit power has reached the maximum transmit power and the accumulated value is positive, or has reached the minimum transmit power and the accumulated value is negative, then the power will no longer be accumulated.

Δ_{F_PUCCH}(F) is the offset value configured by RRC for each PUCCH format (if not configured, it is 0).

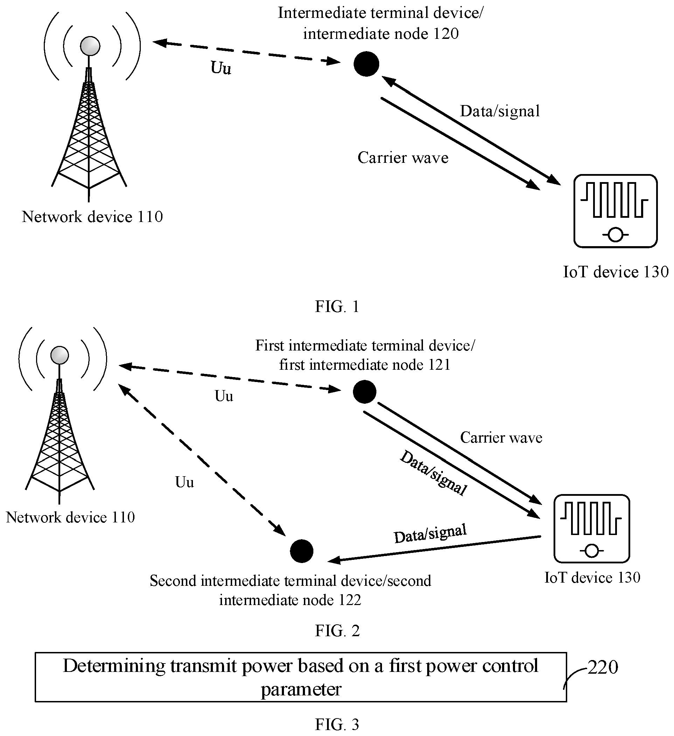

FIG. 1 illustrates a schematic diagram of a communication system according to exemplary embodiments of the present disclosure. The communication system includes a network device 110, an intermediate terminal device 120, and an IoT device 130.

The network device 110 in the present disclosure provides wireless communication functions, and includes but is not limited to: Evolved Node B (eNB), Radio Network Controller (RNC), Node B (NB), Base Station Controller (BSC), Base Transceiver Station (BTS), Home Evolved Node B (or Home Node B, HNB), Baseband Unit (BBU), Access Point (AP) in a Wi-Fi system, wireless relay node, wireless backhaul node, Transmission Point (TP), or Transmission and Reception Point (TRP), etc. It may also be the Next Generation Node B (gNB) or Transmission Point (TRP or TP) in the 5^{th} Generation (5G) mobile communication system, or one or a group of antenna panels (including a plurality of antenna panels) of a base station in the 5G system, or a network node constituting the gNB or Transmission Point, such as a Baseband Unit (BBU) or Distributed Unit (DU), etc. It can also be a base station in the Beyond Fifth Generation (B5G) mobile communication system, the 6^{th} Generation (6G) mobile communication system, or core network (CN), fronthaul, backhaul, RAN, network slicing, etc., or the serving cell, primary cell (Pcell), primary secondary cell (PSCell), special cell (Special Cell, SpCell), secondary cell (Secondary Cell, Scell), neighbor cell, etc. of a terminal device.

The intermediate terminal device 120 in the present disclosure may also be referred to as an intermediate node. This intermediate terminal device 120 may also be referred to as User Equipment (UE), an access terminal, a subscriber unit, a subscriber station, a mobile station, a movable stage, a remote station, a remote terminal, a mobile device, a user terminal, a terminal, a wireless communication device, a user agent, or a user device. The terminal device includes but is not limited to: a handheld device, a wearable device, a vehicle-mounted device, and an IoT device, such as a mobile phone, a tablet computer, an e-book reader, a laptop computer, a desktop computer, a TV, a game console, a mobile Internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self-driving, a wireless terminal in remote medical technology, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premise equip, and the like.

The intermediate terminal device 120 and the network device 110 communicate with each other via an air interface technology, such as a Uu interface. Illustratively, there are two communication scenarios between the intermediate terminal device 120 and the network device 110: an uplink communication scenario and a downlink communication scenario. The uplink communication refers to the intermediate terminal device 120 transmitting signals to the network device 110; and the downlink communication refers to the network device 110 transmitting signals to the intermediate terminal device 120.

The IoT device 130 in the present disclosure can also be referred to as an Ambient IoT device or a zero-power device. In related technologies, bidirectional communication exists between the intermediate terminal device 120 and the IoT device 130. The intermediate terminal device 120 transmits carrier waves to the IoT device 130 and transmits data and/or signals to the IoT device 130, and receives data and/or signals backscattered by the zero-power device.

In the embodiments of the present disclosure, there may be one or more intermediate terminal devices 120. When there is one intermediate terminal device 120, the communication between the intermediate terminal device 120 and the network device 110 and the communication between the intermediate terminal device 120 and the IoT device 130 are as shown in FIG. 1 above. When there are a plurality of intermediate terminal devices 120, as shown in FIG. 2, the first intermediate terminal device 121 communicates with the network device 110 through a certain air interface technology, such as the Uu interface; the first intermediate terminal device 121 communicates unidirectionally with the IoT device 130, and transmits at least one of the carrier wave, data, or the signal to the IoT device 130; the second intermediate terminal device 122 communicates with the network device 110 through a certain air interface technology, such as the Uu interface; and the second intermediate terminal device 122 communicates unidirectionally with the IoT device 130, and receives the data or signal fed back from the IoT device 130.

In some embodiments, during the process where the intermediate terminal device 120 transmits at least one of the carrier wave, the data, or the signal to the IoT device 130, other terminal devices may simultaneously transmit the data or signal to the network device 110. At this time, how to avoid interference from the intermediate terminal device 130 when transmitting at least one of the carrier wave, the data, or the signal to other data transmissions is an urgent problem to be solved.

Addressing the aforementioned problems, embodiments of the present disclosure propose a method for controlling transmit power. This method aims to minimize interference caused by intermediate terminal device when transmitting at least one of the carrier wave, the data, or the signal, thereby avoiding the effect on other data transmissions. FIG. 3 illustrates the flowchart of the method for controlling transmit power according to some exemplary embodiments of the present disclosure. This method is performed by a first intermediate terminal device/first intermediate node. In the embodiments of the present disclosure, the description is based on the first intermediate node. The method includes the following step.

**Step 220:** Determining the transmit power based on the first power control parameter.

In some embodiments, the first power control parameter is transmitted by the network device to the first intermediate node. The first power control parameter is used to instruct the first intermediate node to determine the transmit power used when transmitting at least one of the carrier wave, the data, or the signal to the IoT device. In the embodiments of the present disclosure, the IoT device is exemplified as an Ambient IoT device for illustration.

In some embodiments, the first power control parameter is used to indicate the transmit power used when the first intermediate node transmits the carrier wave to the IoT device. It is understandable that the carrier wave is a type of radio wave used to carry the signal, such as a sine wave. Illustratively, the carrier wave transmitted by the first intermediate node to the IoT device does not carry data.

In some embodiments, the first power control parameter is used to indicate the transmit power used when the first intermediate node transmits the data to the IoT device. Optionally, the data includes at least one of data information or control information.

In some embodiments, the first power control parameter is used to indicate the transmit power used when the first intermediate node transmits the signal to the IoT device. Optionally, this signal may be understood as a reference signal or a pilot signal. Alternatively, this signal and the data transmitted by the first intermediate node to the IoT device occupy the same time-frequency resource unit during transmission, or are understood as being transmitted simultaneously and carried on the same transmission resource. Alternatively, this signal and the data transmitted by the first intermediate node to the IoT device occupy different time-frequency resource units during transmission, or are understood as being carried on different transmission resources, meaning that the signal and the data transmitted by the first intermediate node to the IoT device are transmitted separately. In the embodiments of the present disclosure, an example is given where the signal and the data transmitted by the first intermediate node to the IoT device are transmitted synchronously.

In some embodiments, the aforementioned method further includes: receiving a first power control parameter.

In some embodiments, the first power control parameter includes at least one of the following: the open-loop power control parameter; or the closed-loop power control parameter.

Optionally, the first power control parameter is the open-loop power control parameter. This open-loop power control parameter is configured by the network device, which is conducive to reducing the signaling overhead of the network device transmitting the closed-loop power control parameter, and also facilitates the intermediate node to flexibly adjust the transmit power. In the case where the first power control parameter is the open-loop power control parameter, the first intermediate node determines, based on the open-loop power control parameter, the transmit power used when transmitting at least one of the carrier wave, the data, or the signal to the IoT device.

Optionally, the first power control parameter is the closed-loop power control parameter. This closed-loop power control parameter can assist the network device in dynamically adjusting the transmit power of the first intermediate node. When the first power control parameter is the closed-loop power control parameter, the first intermediate node determines, based on the closed-loop power control parameter, the transmit power used when transmitting at least one of the carrier wave, the data, or the signal to the IoT device.

In some embodiments, the transmit power is the power used when the first intermediate node transmits at least one of the carrier wave, the data, or the signal to the IoT device.

In summary, in the method provided in the embodiments, the transmit power used when the first intermediate node transmits at least one of the carrier wave, the data, or the signal to IoT devices is determined based on the first power control parameter. On the one hand, it can ensure the performance of the first intermediate node when transmitting at least one of the carrier wave, the data, or the signal to IoT devices. On the other hand, controlling the transmit power is beneficial for reducing the interference of the first intermediate node on other data transmissions when transmitting at least one of the carrier wave, the data, or the signal.

### For the open-loop power control parameter

In some embodiments, the aforementioned step 220 may be replaced with the following sub-step.

**Step 221:** Determining the transmit power based on the open-loop power control parameter.

In some embodiments, the open-loop power control parameter is configured by the network device.

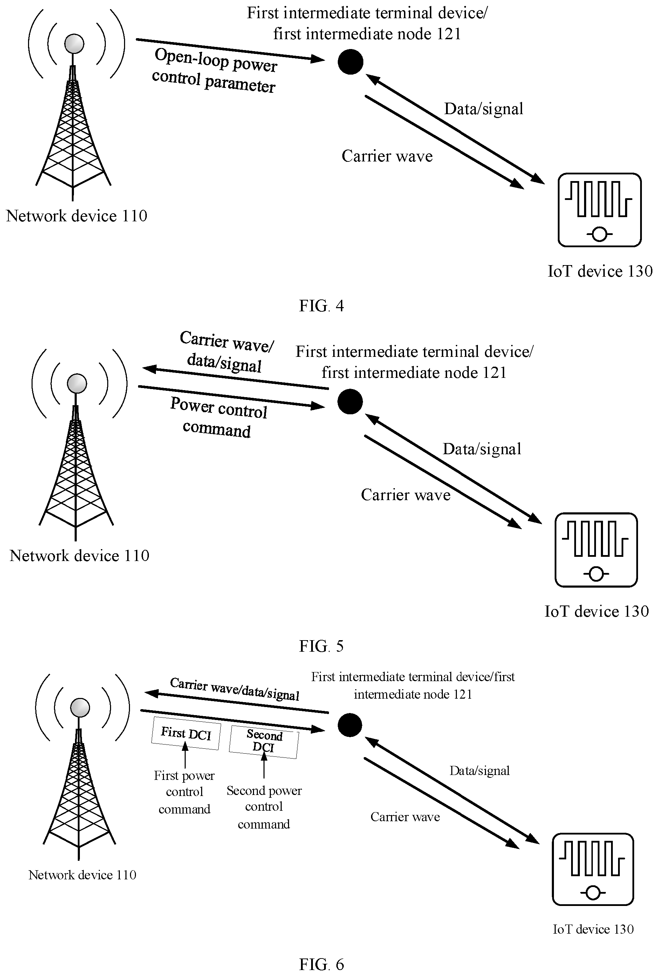

In some embodiments, the method further includes: receiving the open-loop power control parameter. Illustratively, as shown in FIG. 4, the network device 110 transmits the open-loop power control parameter to the first intermediate node 121. Upon receiving the open-loop power control parameter, the first intermediate node 121 determines the transmit power used when transmitting at least one of the carrier wave, the data, or the signal. Based on the determined transmit power, the first intermediate node 121 transmits at least one of the carrier wave, the data, or the signal to the IoT device 130.

In some embodiments, the open-loop power control parameter includes at least one of the following: the first maximum transmit power used when transmitting the carrier wave; the second maximum transmit power used when transmitting the data and the signal; the third maximum transmit power used when transmitting the data; the fourth maximum transmit power used when transmitting the signal; the path loss compensation factor; the basic operating point of the transmit power; the basic operating point of the transmit power based on the downlink path loss; or the basic operating point of the transmit power based on the path loss of the IoT link.

In some embodiments, the open-loop power control parameter includes the first maximum transmit power used when transmitting the carrier wave. The network device transmits, to the first intermediate node, the configured first maximum transmit power used when transmitting the carrier wave.

In some embodiments, the method further includes: receiving the first maximum transmit power. The first maximum transmit power is used to indicate that when the first intermediate node transmits the carrier wave to the IoT device, the power used when transmitting the carrier wave needs to be less than or equal to the first maximum transmit power.

In some embodiments, the open-loop power control parameter includes the second maximum transmit power used when transmitting the data and the signal. The network device transmits, to the first intermediate node, the configured second maximum transmit power used when transmitting the data and the signal.

In some embodiments, the method further includes: receiving the second maximum transmit power. The second maximum transmit power is used to indicate that when the first intermediate node transmits the data and the signal to the IoT device, the power used when transmitting the data and the signal needs to be less than or equal to the second maximum transmit power.

In some embodiments, the open-loop power control parameter includes the third maximum transmit power used when transmitting the data. The network device transmits, to the first intermediate node, the configured third maximum transmit power used when transmitting the data.

In some embodiments, the method further includes: receiving the third maximum transmit power. The third maximum transmit power is used to indicate that when the first intermediate node transmits the data to the IoT device, the power used when transmitting the data needs to be less than or equal to the third maximum transmit power.

In some embodiments, the open-loop power control parameter includes the fourth maximum transmit power used when transmitting the signal. The network device transmits, to the first intermediate node, the configured fourth maximum transmit power used when transmitting the signal. Optionally, the signal includes a reference signal (RS).

In some embodiments, the method further includes: receiving the fourth maximum transmit power. The fourth maximum transmit power is used to indicate that when the first intermediate node transmits the signal to the IoT device, the power used when transmitting the signal needs to be less than or equal to the fourth maximum transmit power.

It should be understood that the data transmitted by the first intermediate node to the IoT device and the signal transmitted by the first intermediate node to the IoT device may be regarded as being carried by the first intermediate node in the same data resource and transmitted to the IoT device. In the embodiments of the present disclosure, the transmitting of the data, the transmitting of the signal, and the transmitting of both the data and the signal are collectively referred to as "transmitting the data and/or the signal" for explanation. The second maximum transmit power used when transmitting the data and the signal, the third maximum transmit power used when transmitting the data, and the fourth maximum transmit power used when transmitting the signal may be collectively referred to as "the maximum transmit power used when transmitting the data and/or the signal".

In some embodiments, the open-loop power control parameter includes the path loss compensation factor. This path loss compensation factor is used to indicate the degree of compensation for path loss by the first intermediate node. Optionally, the value of the path loss compensation factor is 0, 0.4, 0.5, 0.6, 0.7, 0.8, 0.9, or 1. Optionally, the path loss compensation factor includes a downlink path loss compensation factor and/or an IoT link path loss compensation factor. The downlink path loss compensation factor is used to indicate the degree of compensation for downlink path loss by the first intermediate node, and the IoT link path loss compensation factor is used to indicate the degree of compensation for IoT link path loss by the first intermediate node.

In some embodiments, the open-loop power control parameter includes the basic operating point of the transmit power. The basic operating point of the transmit power includes a basic operating point of the transmit power based on downlink path loss and/or a basic operating point of transmit power based on path loss of an IoT link.

In some embodiments, the bidirectional communication between the first intermediate node and the IoT device includes at least one of the following scenarios.

Scenario 1: The first intermediate node transmits the data and/or the signal to the IoT device, and receives the data and/or the signal backscattered by the IoT device.

Scenario 2: The first intermediate node transmits the carrier wave, and the data and/or the signal to the IoT device, and receives the data and/or the signal backscattered by the IoT device.

### For Scenario 1

In some embodiments, when the first intermediate node transmits the data and/or the signal to the IoT device and receives the data and/or the signal backscattered by the IoT device, the aforementioned open-loop power control parameters are individually configured for the first intermediate node by the network device. That is, the signaling of the open-loop power control parameters configured by the network device for the first intermediate node to transmit the data and/or the signal to the IoT device is different from the signaling of the open-loop power control parameters configured by the network device for other uplink transmissions.

Illustratively, Embodiment 1 corresponding to Scenario 1 is illustrated.

In some embodiments, the first intermediate node determines, based on the same set of open-loop power control parameters configured by the network device, the power used when transmitting any channel to the IoT device. The first intermediate node performs open-loop power control solely based on the downlink path loss. At this time, the open-loop power control parameter includes at least one of the following: the second maximum transmit power used when transmitting the data and the signal; the path loss compensation factor; or the basic operating point of the transmit power.

Specifically, the first intermediate node determines the transmit power used when transmitting the data and/or the signal according to the following formula: ${P}_{A - IoT} = min \left({P}_{CMAX},{P}_{0}+α⋅{PL}_{D}+f\right) \left[dBm\right] .$

P_{A-IoT} represents the transmit power used when the first intermediate node transmits the data and/or the signal; P_{CMAX} represents the maximum transmit power used when transmitting the data and/or the signal; P₀ represents the basic operating point of the transmit power; α represents the path loss compensation factor; PL_{D} represents the downlink path loss measured by the first intermediate node; and f represents the power adjustment value determined according to the power control parameter configured by the network device. In some embodiments, when there is no closed-loop power control, f takes the value of 0.

Illustratively, Embodiment 2 corresponding to Scenario 1 is illustrated.

In some embodiments, the first intermediate node determines, based on the same set of open-loop power control parameters configured by the network device, the power used when transmitting any channel to the IoT device. The first intermediate node performs open-loop power control according to the downlink path loss and the measured path loss on the IoT link. At this time, the open-loop power control parameter includes at least one of the following: the second maximum transmit power used when transmitting the data and the signal; the downlink path loss compensation factor; the IoT link path loss compensation factor; the basic operating point of the transmit power based on the downlink path loss; or the basic operating point of the transmit power based on the IoT link path loss. The IoT link refers to the link between the intermediate node and the IoT device, such as the link between the first node and the IoT device.

Specifically, the first intermediate node determines the transmit power used when transmitting the data and/or the signal according to the following formula: ${P}_{A - IoT} = min \left({P}_{CMAX},min\left({P}_{0 , D}+{α}_{D}⋅{PL}_{D},{P}_{0 , A}+{α}_{A}⋅{PL}_{A}\right)+f\right) \left[dBm\right] .$

P_{A-IoT} represents the transmit power used when the first intermediate node transmits the data and/or the signal; P_{CMAX} represents the maximum transmit power used when transmitting the data and/or the signal; P_{0,D} represents the basic operating point of the transmit power based on the downlink path loss; α_{D} represents the downlink path loss compensation factor; PL_{D} represents the downlink path loss measured by the first intermediate node; P_{0,A} represents the basic operating point of the transmit power based on the path loss of the IoT link; α_{A} represents the IoT link path loss compensation factor; PL_{A} represents the direct path loss between the first intermediate node and the IoT device; and f represents the power adjustment value determined according to the power control parameter configured by the network device. In some embodiments, when there is no closed-loop power control, f takes the value of 0.

In some embodiments, the first intermediate node determines the value of the direct path loss between the first intermediate node and the IoT device based on the received data or signal actively transmitted by the IoT device. For example, the value of PL_{A} is determined according to the following formula: ${PL}_{A} = P - {P}_{r} .$

P represents the transmit power of the IoT device. Generally, P is a constant value or a preset value. Pᵣ represents the average receive power of the IoT device measured by the first intermediate node.

Illustratively, Embodiment 3 corresponding to Scenario 1 is illustrated.

In some embodiments, the first intermediate node determines, based on the open-loop power control parameters configured by the network device for different channels or signals, the power used when transmitting the corresponding channel to the IoT device. The first intermediate node performs open-loop power control at least based on the downlink path loss. In some embodiments, the channel includes at least one of the control signal, data channel, and synchronization signal transmitted by the first intermediate node to the IoT device.

At this time, the open-loop power control parameter includes at least one of the following: the second maximum transmit power used when transmitting the data and the signal; the downlink path loss compensation factor; the IoT link path loss compensation factor; the basic operating point of the transmit power based on the downlink path loss; or the basic operating point of the transmit power based on the IoT link path loss.

In some embodiments, the first intermediate node performs open-loop power control based solely on the downlink path loss, and determines the transmit power used when transmitting the data and/or the signal according to the following formula: ${P}_{A - IoT} = min \left({P}_{CMAX},{P}_{0 , D , C}+{α}_{D , C}⋅{PL}_{D}+f\right) \left[dBm\right] .$

P_{A-IoT} represents the transmit power used when the first intermediate node transmits the data and/or the signal; P_{CMAX} represents the maximum transmit power used when transmitting the data and/or the signal; P_{0,D,C} represents the basic operating point of the transmit power based on the downlink path loss; α_{D,C} represents the downlink path loss compensation factor; PL_{D} represents the downlink path loss measured by the first intermediate node; and f represents the power adjustment value determined according to the power control parameter configured by the network device. When there is no closed-loop power control, f takes the value of 0.

In some embodiments, the first intermediate node performs open-loop power control based on the downlink path loss and the IoT link path loss, and determines the transmit power used when transmitting the data and/or the signal according to the following formula: ${P}_{A - IoT , C} = min \left({P}_{CMAX},min\left({P}_{0 , D , C}+{α}_{D , C}⋅{PL}_{D},{P}_{0 , A , C}+{α}_{A , C}⋅{PL}_{A}\right)+f\right) \left[dBm\right] .$

P_{A-IoT} represents the transmit power used when the first intermediate node transmits the data and/or the signal; P_{CMAX} represents the maximum transmit power used when transmitting the data and/or the signal; P_{0,D,C} represents the basic operating point of the transmit power based on the downlink path loss; α_{D,C} represents the downlink path loss compensation factor; PL_{D} represents the downlink path loss measured by the first intermediate node; P_{0,A,C} represents the basic operating point of the transmit power based on the path loss of the IoT link; α_{A,C} represents the IoT link path loss compensation factor; PL_{A} represents the direct path loss between the first intermediate node and the IoT device; and f represents the power adjustment value determined according to the power control parameter configured by the network device. In some embodiments, when there is no closed-loop power control, f takes the value of 0.

In some embodiments, the first intermediate node determines the value of the direct path loss between the first intermediate node and the IoT device based on the received data or signal actively transmitted by the IoT device. For example, the value of PL_{A} is determined according to the following formula: ${PL}_{A} = P - {P}_{r} .$

P represents the transmit power of the IoT device. Generally, P is a constant value or a preset value. Pᵣ represents the average receive power of the IoT device measured by the first intermediate node.

In the method provided in the embodiments, based on the open-loop power control parameter configured by the network device to indicate the first intermediate node to transmit the data and/or the signal to the IoT device, the first intermediate node can determine the transmit power used when transmitting the data and/or the signal to the IoT device, thereby ensuring that the impact on other data transmission processes can be minimized when transmitting the data and/or the signal to the IoT device.

For Scenario 2:
In some embodiments, when the first intermediate node transmits the carrier wave, and the data and/or the signal to the IoT device and receives the data and/or the signal backscattered by the IoT device, the aforementioned open-loop power control parameters are configured exclusively for the first intermediate node by the network device. That is, the signaling of open-loop power control parameters configured by the network device for the first intermediate node to transmit the carrier wave and the data and/or the signal to the IoT device is different from the signaling of open-loop power control parameters corresponding to other uplink transmissions configured by the network device.

Illustratively, Embodiment 1 corresponding to Scenario 2 is illustrated.

The first intermediate node determines, based on the same set of open-loop power control parameters configured by the network device, the power used when transmitting the carrier wave and any channel to the IoT device. The first intermediate node performs open-loop power control solely based on the downlink path loss. At this time, the open-loop power control parameter includes at least one of the following: the first maximum transmit power used when transmitting the carrier wave; the second maximum transmit power used when transmitting the data and the signal; the path loss compensation factor; or the basic operating point of transmit power.

Specifically, the first intermediate node determines the transmit power used when transmitting the data and/or the signals according to the following formula: ${P}_{A - IoT} = min \left({P}_{CMAX},{P}_{0}+α⋅{PL}_{D}+f\right) \left[dBm\right] .$

P_{A-IoT} represents the transmit power used when the first intermediate node transmits the data and/or the signal; P_{CMAX} represents the maximum transmit power used when transmitting the data and/or the signal; P₀ represents the basic operating point of the transmit power; α represents the path loss compensation factor; PL_{D} represents the downlink path loss measured by the first intermediate node; and f represents the power adjustment value determined according to the power control parameters configured by the network device. In some embodiments, when there is no closed-loop power control, f takes the value of 0.

Specifically, the first intermediate node determines the transmit power used when transmitting the carrier wave according to the following formula: ${P}_{A - IoT , cw} = min \left({P}_{CMAX 1},{P}_{0}+α⋅{PL}_{D}+Δ+{f}_{cw}\right) \left[dBm\right] .$

P_{A-IoT,cw} represents the transmit power used when transmitting the carrier wave by the first intermediate node; P_{CMAX1} represents the first maximum transmit power used when transmitting the carrier wave; P₀ represents the basic operating point of the transmit power; α represents the path loss compensation factor; PL_{D} represents the downlink path loss measured by the first intermediate node; Δ represents the offset value of the transmit power used when transmitting the carrier wave relative to the transmit power used when transmitting the data and/or the signal; and f_{cw} represents the power adjustment value determined according to the power control parameter transmitted by the network device for the carrier wave. In some embodiments, Δ is configured by the network device. In some embodiments, if Δ is not configured by the network device, Δ=0.

Illustratively, Embodiment 2 corresponding to Scenario 2 is illustrated.

In some embodiments, the first intermediate node determines, based on the same set of open-loop power control parameters configured by the network device, the power used when transmitting the carrier wave and any channel to the IoT device. The first intermediate node performs open-loop power control according to the downlink path loss and the measured path loss on the IoT link. At this time, the open-loop power control parameter includes at least one of the following: the first maximum transmit power used when transmitting the carrier wave; the second maximum transmit power used when transmitting the data and the signal; the downlink path loss compensation factor; the IoT link path loss compensation factor; the basic operating point of the transmit power based on the downlink path loss; or the basic operating point of the transmit power based on the IoT link path loss.

Specifically, the first intermediate node determines the transmit power used when transmitting the data and/or the signal according to the following formula: ${P}_{A - IoT} = min \left({P}_{CMAX},min\left({P}_{0 , D}+{α}_{D}⋅{PL}_{D},{P}_{0 , A}+{α}_{A}⋅{PL}_{A}\right)+f\right) \left[dBm\right] .$

P_{A-IoT} represents the transmit power used when the first intermediate node transmits the data and/or the signal; P_{CMAX} represents the maximum transmit power used when transmitting the data and/or the signal; P_{0,D} represents the basic operating point of the transmit power based on the downlink path loss; α_{D} represents the downlink path loss compensation factor; PL_{D} represents the downlink path loss measured by the first intermediate node; P_{0,A} represents the basic operating point of the transmit power based on the path loss of the IoT link; α_{A} represents the IoT link path loss compensation factor; PL_{A} represents the direct path loss between the first intermediate node and the IoT device; and f represents the power adjustment value determined according to the power control parameter configured by the network device. In some embodiments, when there is no closed-loop power control, f takes the value of 0.

In some embodiments, the first intermediate node determines the value of the direct path loss between the first intermediate node and the IoT device based on the received data or signal actively transmitted by the IoT device. For example, PL_{A} the value is determined according to the following formula: ${PL}_{A} = P - {P}_{r} .$

Prepresents the transmit power of the IoT device. Generally, P is a constant value or a preset value. Pᵣ represents the average receive power of the IoT device measured by the first intermediate node.

Specifically, the first intermediate node determines the transmit power used when transmitting the carrier wave according to the following formula: ${P}_{A - IoT , cw} = min \left({P}_{CMAX 1},min\left({P}_{0 , D}+{α}_{D}⋅{PL}_{D},{P}_{0 , A}+{α}_{A}⋅{PL}_{A}\right)+Δ+{f}_{cw}\right) \left[dBm\right] .$

P_{A-IoT,cw} represents the transmit power used when transmitting the carrier wave by the first intermediate node; P_{CMAX1} represents the first maximum transmit power used when transmitting the carrier wave; P_{0,D} represents the basic operating point of the transmit power based on the downlink path loss; α_{D} represents the downlink path loss compensation factor; PL_{D} represents the downlink path loss measured by the first intermediate node; P_{0,A} represents the basic operating point of the transmit power based on the path loss of the IoT link; α_{A} represents the IoT link path loss compensation factor; PL_{A} represents the direct path loss between the first intermediate node and the IoT device; Δ represents the offset value of the transmit power used when transmitting the the carrier wave relative to the transmit power used when transmitting the data and/or the signal; f_{cw} represents the power adjustment value determined according to the power control parameter transmitted by the network device for the carrier wave. In some embodiments, Δ is configured by the network device. In some embodiments, if Δ is not configured by the network device, Δ=0.

Illustratively, Embodiment 3 corresponding to Scenario 2 is illustrated.

In some embodiments, the first intermediate node determines, based on the open-loop power control parameters configured by the network device for different channels or signals, the power used when transmitting the carrier wave and any channel to the IoT device. The first intermediate node performs open-loop power control at least based on the downlink path loss. In some embodiments, the channel includes at least one of the control signal, data channel, and synchronization signal transmitted by the first intermediate node to the IoT device.

At this time, the open-loop power control parameter includes at least one of the following: the first maximum transmit power used when transmitting the carrier wave; the second maximum transmit power used when transmitting the data and the signal; the downlink path loss compensation factor; the IoT link path loss compensation factor; the basic operating point of the transmit power based on the downlink path loss; or the basic operating point of the transmit power based on the IoT link path loss.

In some embodiments, the first intermediate node performs open-loop power control based solely on the downlink path loss, and determines the transmit power used when transmitting the data and/or the signal according to the following formula: ${P}_{A - IoT} = min \left({P}_{CMAX},{P}_{0 , D , C}+{α}_{D , C}⋅{PL}_{D}+f\right) \left[dBm\right] .$

P_{A-IoT} represents the transmit power used when the first intermediate node transmits the data and/or the signal; P_{CMAX} represents the maximum transmit power used when transmitting the data and/or the signal; P_{0,D,C} represents the basic operating point of the transmit power based on the downlink path loss; α_{D,C} represents the downlink path loss compensation factor; PL_{D} represents the downlink path loss measured by the first intermediate node; and f represents the power adjustment value determined according to the power control parameter configured by the network device. In some embodiments, when there is no closed-loop power control, f takes the value of 0.

The first intermediate node determines the transmit power used when transmitting the carrier wave according to the following formula: ${P}_{A - IoT , cw} = min \left({P}_{CMAX 1},{P}_{0 , D , C}+{α}_{D , C}⋅{PL}_{D}+{f}_{cw}\right) \left[dBm\right] .$

P_{A-IoT,cw} represents the transmit power used when transmitting the carrier wave by the first intermediate node; P_{CMAX1} represents the first maximum transmit power used when transmitting the carrier wave; P_{0,D,C} represents the basic operating point of the transmit power based on the downlink path loss; α_{D,C} represents the downlink path loss compensation factor; PL_{D} represents the downlink path loss measured by the first intermediate node; and f_{cw} represents the power adjustment value determined according to the power control parameter transmitted by the network device for the carrier wave.

In some embodiments, the first intermediate node performs open-loop power control based on the downlink path loss and the IoT link path loss, and determines the transmit power used when transmitting the data and/or the signal according to the following formula: ${P}_{A - IoT , C} = min \left({P}_{CMAX},min\left({P}_{0 , D , C}+{α}_{D , C}⋅{PL}_{D},{P}_{0 , A , C}+{α}_{A , C}⋅{PL}_{A}\right)+f\right) \left[dBm\right] .$

P_{A-IoT} represents the transmit power used when the first intermediate node transmits the data and/or the signal; P_{CMAX} represents the maximum transmit power used when transmitting the data and/or the signal; P_{0,D,C} represents the basic operating point of the transmit power based on the downlink path loss; α_{D,C} represents the downlink path loss compensation factor; PL_{D} represents the downlink path loss measured by the first intermediate node; P_{0,A,C} represents the basic operating point of the transmit power based on the path loss of the IoT link; α_{A,C} represents the IoT link path loss compensation factor; PL_{A} represents the direct path loss between the first intermediate node and the IoT device; and f represents the power adjustment value determined according to the power control parameter configured by the network device. In some embodiments, when there is no closed-loop power control, f takes the value of 0.

In some embodiments, the first intermediate node determines the value of the direct path loss between the first intermediate node and the IoT device based on the received data or signal actively transmitted by the IoT device. For example, the value of PL_{A} is determined according to the following formula: ${PL}_{A} = P - {P}_{r} .$

P represents the transmit power of the IoT device. Generally, P is a constant or preset value. Pᵣ represents the average receive power of the IoT device measured by the first intermediate node.

The first intermediate node determines the transmit power used when transmitting the carrier wave according to the following formula: ${P}_{A - IoT , cw} = min \left({P}_{CMAX 1},min\left({P}_{0 , D , C}+{α}_{D , C}⋅{PL}_{D},{P}_{0 , A , C}+{α}_{A , C}⋅{PL}_{A}\right)+{f}_{cw}\right) \left[dBm\right] .$

P_{A-IoT,cw} represents the transmit power used when transmitting the carrier wave by the first intermediate node; P_{CMAX1} represents the first maximum transmit power used when transmitting the carrier wave; P_{0,D,C} represents the basic operating point of the transmit power based on the downlink path loss; α_{D,C} represents the downlink path loss compensation factor; PL_{D} represents the downlink path loss measured by the first intermediate node; P_{0,A,C} represents the basic operating point of the transmit power based on the path loss of the IoT link; α_{A,C} represents the IoT link path loss compensation factor; PL_{A} represents the direct path loss between the first intermediate node and the IoT device; and f_{cw} represents the power adjustment value determined based on the power control parameter for the carrier wave transmitted by the network device.

In the method provided in the embodiments, based on the open-loop power control parameters configured by the network device to indicate the first intermediate node to transmit the carrier wave, and the data and/or the signal to the IoT device, the first intermediate node can determine the transmit power used when transmitting the carrier wave to the IoT device and the transmit power used when transmitting the data and/or the signal to the IoT device. This ensures that the impact on other data transmission processes can be minimized when transmitting the carrier wave, and the data and/or the signal to the IoT device.

### For the closed-loop power control parameter

In some embodiments, the aforementioned step 220 may be replaced with the following sub-step.

**Step 222:** Determining the transmit power based on the closed-loop power control parameter.

In some embodiments, the closed-loop power control parameter is indicated by the network device through the power control command.

In some embodiments, the aforementioned method further includes: receiving a power control command. This power control command is used to instruct the first intermediate node to determine the closed-loop power control parameter for the transmit power. Illustratively, as shown in FIG. 5, the first intermediate node 121 transmits at least one of the carrier wave, the data, or the signal. Based on the at least one of the carrier wave, the data, or the signal transmitted by the first intermediate node 121, the network device 110 determines to transmit the power control command associated with the at least one of the carrier wave, the data, or the signal to the first intermediate node 121. This power control command is used to indicate the closed-loop power control parameter to the first intermediate node 121. The first intermediate node 121 determines, based on the closed-loop power control parameter indicated by the power control command, the transmit power used when transmitting at least one of the carrier wave, the data, or the signal to the IoT device. The first intermediate node 121 transmits at least one of the carrier wave, the data, or the signal to the IoT device 130 based on the determined transmit power.

In some embodiments, the power control command includes at least one of the following: the first power control command associated with the carrier wave; the second power control command associated with the data and the signal; the third power control command associated with the carrier wave, the data, and the signal; the fourth power control command associated with the data; or the fifth power control command associated with the signal.

In some embodiments, the power control command includes the first power control command associated with the carrier wave. The first power control command is used to instruct the first intermediate node to determine the closed-loop power control parameter for the transmit power used when transmitting the carrier wave.

In some embodiments, the power control command includes the second power control command associated with the data and the signal. The second power control command is used to instruct the first intermediate node to determine the closed-loop power control parameter for the transmit power used when transmitting the data and the signal.

In some embodiments, the power control command includes the third power control command associated with the carrier wave, the data, and the signal. This third power control command is used to instruct the first intermediate node to determine the closed-loop power control parameters for the transmit power used when transmitting the carrier wave and the transmit power used when transmitting the data and/or the signal.

In some embodiments, the power control command includes the fourth power control command associated with the data. The fourth power control command is used to instruct the first intermediate node to determine the closed-loop power control parameter for the transmit power used when transmitting the data.

In some embodiments, the power control command includes the fifth power control command associated with the signal. The fifth power control command is used to instruct the first intermediate node to determine the closed-loop power control parameter for the transmit power used when transmitting the signal.

It should be understood that the data transmitted by the aforementioned first intermediate node to the IoT device and the signal transmitted by the first intermediate node to the IoT device may be regarded as being carried by the first intermediate node in the same data resource and transmitted to the IoT device. In the embodiments of the present disclosure, the transmitting of the data, the transmitting of the signal, and the transmitting of both the data and the signal are collectively referred to as "transmitting the data and/or the signal" for explanation. The second power control command associated with the data and the signal, the fourth power control command associated with the data, and the fifth power control command associated with the signal can be collectively referred to as "the power control command associated with the data and/or the signal".

In some embodiments, the network device transmits the power control command through downlink control information (DCI).

Optionally, the DCI may be the DCI for the network device to schedule the first intermediate node to transmit the carrier wave, or the DCI for the network device to schedule the first intermediate node to transmit the data and/or the signal.

In some embodiments, when the aforementioned DCI is the DCI for the network device to schedule the first intermediate node to transmit the carrier wave, or the DCI for the network device to schedule the first intermediate node to transmit the data and/or the signal, the network device transmits the power control command through the DCI in at least one of the following methods.

Method 1: The network device schedules, through different DCI, the first intermediate node to transmit the carrier wave and transmit the data and/or the signal. For example, the network device schedules, through the first DCI, the first intermediate node to transmit the carrier wave, and schedules, through the second DCI, the first intermediate node to transmit the data and/or the signal. At this time, the first power control command is carried in the first DCI, and the second power control command is carried in the second DCI. The first DCI is the DCI used for scheduling the transmission of carrier wave, and the second DCI is the DCI used for scheduling the transmission of the data or the signal. Illustratively, as shown in FIG. 6, the network device 110 carries the first power control command associated with carrier wave through the first DCI, and carries the second power control command associated with the data and the signal through the second DCI.

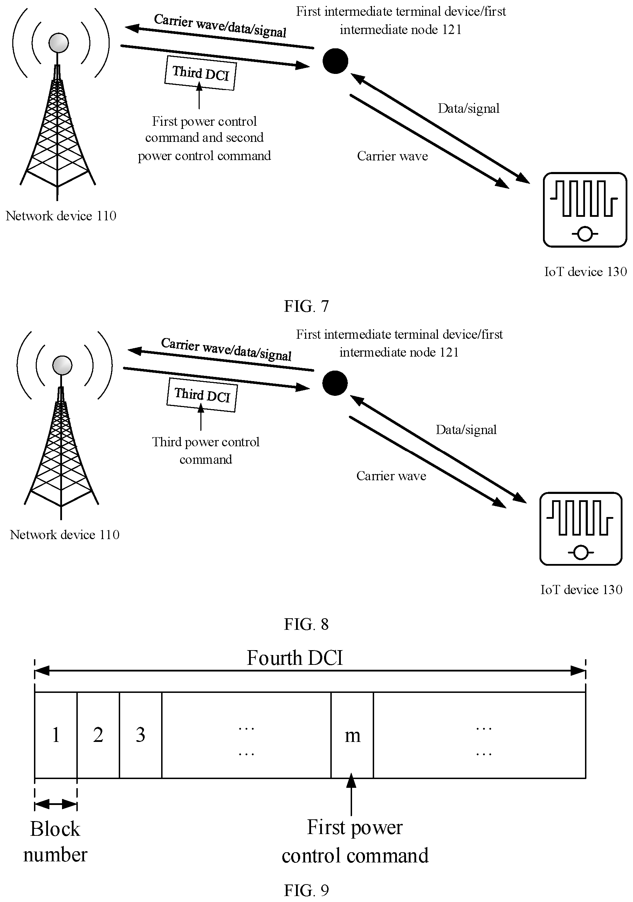

Method 2: The network device schedules, through the same DCI, the first intermediate node to transmit the carrier wave and transmit the data and/or the signal. For example, the first intermediate node is scheduled, through the third DCI, to transmit the carrier wave and transmit the data and/or the signal. At this time, the first power control command and the second control command are carried in the third DCI, or the third power control command is carried in the third DCI. The third DCI is the DCI used to schedule the transmission of at least one of the carrier wave, the data, or the signal. Illustratively, as shown in FIG. 7, the network device 110 carries the first power control command associated with the carrier wave and the second power control command associated with the data and the signal through the third DCI. Alternatively, illustratively, as shown in FIG. 8, the network device 110 carries the third power control command associated with the carrier wave, the data, and the signal through the third DCI.

In some embodiments, the third DCI is used to allocate the transmission resource for the first intermediate node to transmit the carrier wave and the transmission resource for the first intermediate node to transmit the data and/or the signal. The first intermediate node determines whether to transmit the carrier wave or transmit the data and/or the signal.

In some embodiments, the third DCI indicates, through different bit fields, the scheduling of the first intermediate node to transmit the carrier wave and transmit the data and/or the signal. For instance, the first bit field in the third DCI is used to indicate the scheduling of the first intermediate node to transmit the carrier wave, while the second bit field in the third DCI is used to indicate the scheduling of the first intermediate node to transmit the data and/or the signal. The first and second bit fields are different bit fields in the third DCI.

In some embodiments, the third DCI indicates, through the same bit field, the scheduling of the first intermediate node to transmit the carrier wave and transmit the data and/or the signal. For instance, the first bit field in the third DCI is used to indicate the scheduling of the first intermediate node to transmit the carrier wave and the scheduling of the first intermediate node to transmit the data and/or the signal.

Optionally, the DCI may be the DCI dedicated to transmission of the power control command, such as DCI format 2-2. The number of bits of this DCI dedicated to transmission of the power control command is configured by the network device. The radio network temporary identifier (RNTI) used to scramble this DCI dedicated to transmission of the power control command is different from the transmit power control (TPC)-physical uplink shared channel (PUSCH)-RNTI and TPC-PUCCH-RNTI.

In some embodiments, in the case where the aforementioned DCI is dedicated to transmission of the power control command, the network device transmits the power control command through the DCI in at least one of the following methods.

Method 3: The network device schedules, through different block numbers in the DCI, the first intermediate node to transmit the carrier wave and transmit the data and/or the signal. For example, the network device schedules the first intermediate node to transmit the carrier wave through the first block number in the fourth DCI, and schedules the first intermediate node to transmit the data and/or the signal through the second block number in the fifth DCI. At this time, the first power control command is carried in the first block number in the fourth DCI, and the second power control command is carried in the second block number in the fifth DCI.

In some embodiments, the number of bits of the first block number is configured by the network device. The number of bits of the second block number is also configured by the network device. Optionally, each block number includes two bits. For instance, the first block number in the fourth DCI includes two bits, and the second block number in the fifth DCI includes two bits.

In some embodiments, the first block number is block number m in the fourth DCI. m is a positive integer and its value is configured by the network device. Illustratively, as shown in FIG. 9, the fourth DCI is dedicated to transmission of the power control command, and includes at least one block number. The network device carries the first power control command associated with the carrier wave through block number m (also referred to as the m-th block number) in the fourth DCI.

In some embodiments, the second block number is block number n in the fifth DCI. n is a positive integer and its value is configured by the network device.

In some embodiments, the fourth DCI and the fifth DCI are scrambled using different RNTIs. The RNTI used for scrambling the fourth DCI is different from the TPC-PUSCH-RNTI and the TPC-PUCCH-RNTI. The RNTI used for scrambling the fifth DCI is different from the TPC-PUSCH-RNTI and the TPC-PUCCH-RNTI.

Method 4: The network device schedules, through the block number in the same DCI, the first intermediate node to transmit the carrier waves and transmit the data and/or the signal. For instance, the first intermediate node is scheduled, through the third block number in the sixth DCI, to transmit the carrier wave and transmit the data and/or the signal. At this time, the first power control command and the second control command are carried in the third block number in the sixth DCI, or the third power control command is carried in the third block number in the sixth DCI.

In some embodiments, the number of bits of the third block number is configured by the network device. Optionally, the third block number includes two bits. Optionally, the third block number includes three bits, among which is an indication bit. When the indication bit takes the first value, the bit in the third block number other than the indication bit carries the first power control command; or when the indication bit takes the second value, the bit in the third block number other than the indication bit carries the second power control command. For example, when the value of the indication bit is 0, the bit in the third block number other than the indication bit carries the first power control command; or when the value of the indication bit is 1, the bit in the third block number other than the indication bit carries the second power control command. When the value of the indication bit is 1, the bit in the third block number other than the indication bit carries the first power control command; or when the value of the indication bit is 0, the bit in the third block number other than the indication bit carries the second power control command.

In some embodiments, the third block number is block number p in the sixth DCI. p is a positive integer and its value is configured by the network device.

In some embodiments, the RNTI used for scrambling the sixth DCI is different from the TPC-PUSCH-RNTI and TPC-PUCCH-RNTI.

In some embodiments, the network device schedules, through different block numbers in different DCI, the first intermediate node to transmit the carrier wave and transmit the data and/or the signal. Alternatively, the network device schedules, through the same block number in different DCI, the first intermediate node to transmit the carrier wave and transmit the data and/or the signal.

In the method provided in the embodiments, due to the potential differences in interference caused by the carrier wave, and the data and/or the signal transmitted by the first intermediate node to the uplink reception of the network device, the method of determining the transmit power based on the closed-loop power control parameter can achieve separate control over the transmit power used when transmitting the carrier wave and the transmit power used when transmitting the data and/or the signal.

In some embodiments, when there are at least two intermediate nodes, the transmit power of the first intermediate node is determined based on the first power control parameter and the power control parameter transmitted by another intermediate node other than the first intermediate node. In the embodiments of the present disclosure, two intermediate nodes are taken as an example for illustration. The aforementioned step 220 may be replaced with the following sub-step.

Step 223: Determining the transmit power based on the first power control parameter and the second power control parameter transmitted by the second intermediate node.

In some embodiments, the first power control parameter is described in detail in steps 220 to 222 mentioned above.

In some embodiments, the second power control parameter transmitted by the second intermediate node includes at least one of the following: the sixth power control command; the path loss between the first intermediate node and the second intermediate node; the fifth maximum transmit power used when the first intermediate node transmits the carrier wave; the sixth maximum transmit power used when the first intermediate node transmits the data and the signal; the seventh maximum transmit power used when the first intermediate node transmits the data; or the eighth maximum transmit power used when the first intermediate node transmits the signal.

In some embodiments, the second power control parameter transmitted by the second intermediate node includes the sixth power control command. This sixth power control command is the power control command transmitted by the second intermediate node to the first intermediate node.

In some embodiments, the above method further includes: receiving the sixth power control command. The sixth power control command is used to instruct the first intermediate node to determine the closed-loop power control parameter for the transmit power.

In some embodiments, the second power control parameter transmitted by the second intermediate node includes the path loss between the first intermediate node and the second intermediate node. This path loss is used to indicate the degree of compensation by the first intermediate node for the path loss between the first intermediate node and the second intermediate node.

In some embodiments, the second power control parameter transmitted by the second intermediate node includes the fifth maximum transmit power used when the first intermediate node transmits the carrier wave. The second intermediate node transmits, to the first intermediate node, the configured fifth maximum transmit power used when transmitting the carrier wave.

In some embodiments, the method further includes: receiving the fifth maximum transmit power. The fifth maximum transmit power is used to indicate that when the first intermediate node transmits the carrier wave to the IoT device, the power used when transmitting the carrier wave needs to be less than or equal to the fifth maximum transmit power.

In some embodiments, the second power control parameter transmitted by the second intermediate node includes the sixth maximum transmit power used when the first intermediate node transmits the data and the signal. The second intermediate node transmits, to the first intermediate node, the configured sixth maximum transmit power used when transmitting the data and the signal .

In some embodiments, the method further includes: receiving the sixth maximum transmit power. This sixth maximum transmit power is used to indicate that when the first intermediate node transmits the data and the signal to the IoT device, the power used when transmitting the data and the signal needs to be less than or equal to the sixth maximum transmit power.

In some embodiments, the second power control parameter transmitted by the second intermediate node includes the seventh maximum transmit power used when the first intermediate node transmits the data. The second intermediate node transmits, to the first intermediate node, the configured seventh maximum transmit power used when transmitting the data.

In some embodiments, the method further includes: receiving the seventh maximum transmit power. The seventh maximum transmit power is used to indicate that when the first intermediate node transmits the data to the IoT device, the power used when transmitting the data needs to be less than or equal to the seventh maximum transmit power.

In some embodiments, the second power control parameter transmitted by the second intermediate node includes the eighth maximum transmit power used when the first intermediate node transmits the signal. The second intermediate node transmits, to the first intermediate node, the configured eighth maximum transmit power used when transmitting the signal.

In some embodiments, the method further includes: receiving the eighth maximum transmit power. The eighth maximum transmit power is used to indicate that when the first intermediate node transmits the signal to the IoT device, the power of the signal needs to be less than or equal to the eighth maximum transmit power.

It should be understood that the data transmitted by the first intermediate node to the IoT device and the signal transmitted by the first intermediate node to the IoT device may be regarded as being carried by the first intermediate node in the same data resource and transmitted to the IoT device. In the embodiments of the present disclosure, the transmitting of the data, the transmitting of the signal, and the transmitting of both the data and the signal are collectively referred to as "transmitting the data and/or the signal" for explanation. The sixth maximum transmit power used when transmitting the data, the seventh maximum transmit power used when transmitting the data, and the eighth maximum transmit power used when transmitting the signal may be collectively referred to as "the maximum transmit power used when transmitting the data and/or the signal".

In summary, in the method provided in the embodiments, the transmit power is determined based on the first power control parameter and the second power control parameter transmitted by the second intermediate node, enabling the first intermediate node to simultaneously consider the network device and another intermediate node when transmitting at least one of the carrier wave, the data, or the signal to the IoT device. This is conducive to further ensuring the performance of the first intermediate node in transmitting at least one of the carrier wave, the data, or the signal to the IoT device, and to further reducing the interference of the first intermediate node on other data transmissions when transmitting at least one of the carrier wave, the data, or the signal.

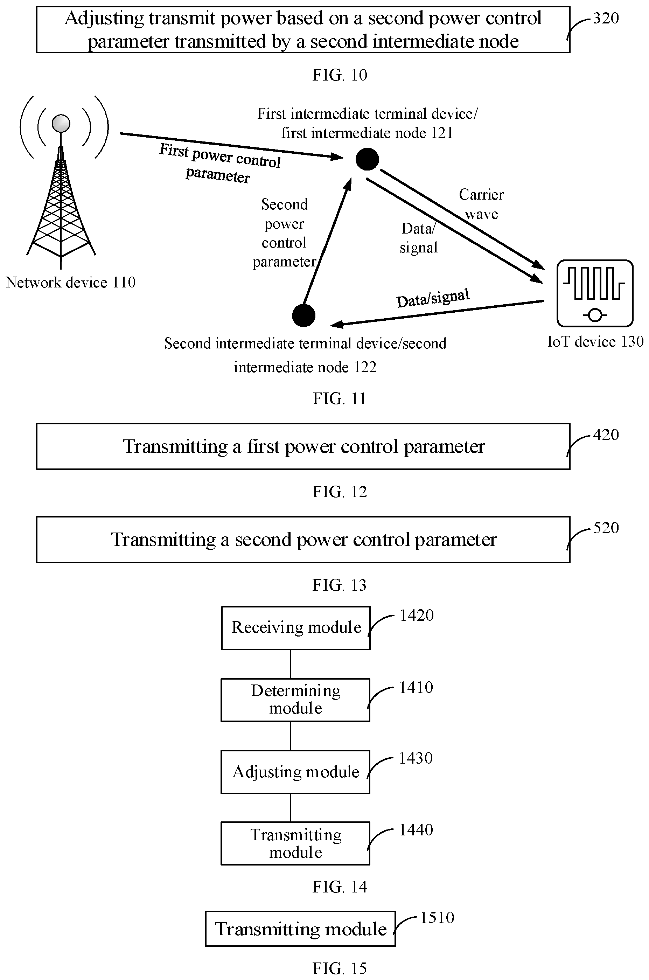

FIG. 10 illustrates a flowchart of a method for controlling transmit power according to some exemplary embodiments of the present disclosure. The method is performed by a first intermediate terminal device/first intermediate node. The method includes the following step.

**Step 320:** Adjusting the transmit power based on the second power control parameter transmitted by the second intermediate node.

In some embodiments, the first power control parameter is described in detail in steps 220 to 222 mentioned above.

In some embodiments, the second power control parameter transmitted by the second intermediate node includes at least one of the following: the sixth power control command; the path loss between the first intermediate node and the second intermediate node; the fifth maximum transmit power used when the first intermediate node transmits the carrier wave; the sixth maximum transmit power used when the first intermediate node transmits the data and the signal; the seventh maximum transmit power used when the first intermediate node transmits the data; or the eighth maximum transmit power used when the first intermediate node transmits the signal.

Specifically, the second power control parameter is described in detail in step 223 mentioned above.

Illustratively, as shown in FIG. 11, the network device 110 transmits the first power control parameter to the first intermediate node 121, and the second intermediate node 122 transmits the second power control parameter to the first intermediate node. Based on the first and second power control parameters, the first intermediate node 121 determines the transmit power used when transmitting at least one of the carrier wave, the data, or the signal. Based on the determined transmit power, the first intermediate node 121 transmits at least one of the carrier wave, the data, or the signal to the IoT device 130.

In summary, in the method provided in the embodiments, the transmit power is adjusted based on the second power control parameter transmitted by the second intermediate node, enabling the first intermediate node to simultaneously consider the network device and another intermediate node when transmitting at least one of the carrier wave, the data, or the signal to the IoT device. This is conducive to further ensuring the performance of the first intermediate node in transmitting at least one of the carrier wave, the data, or the signal to the IoT device, and to further reducing the interference of the first intermediate node on other data transmissions when transmitting at least one of the carrier wave, the data, or the signal.

FIG. 12 illustrates a flowchart of a method for controlling transmit power according to some exemplary embodiments of the present disclosure. The method is performed by a network device. The method includes the following step.

**Step 420:** Transmitting the first power control parameter.

In some embodiments, the first power control parameter is transmitted by the network device to the first intermediate node. The first power control parameter is used to instruct the first intermediate node to determine the transmit power used when transmitting at least one of the carrier wave, the data, or the signal to the IoT device. In the embodiments of the present disclosure, the IoT device is exemplified as an Ambient IoT device for illustration.

In some embodiments, the first power control parameter is used to indicate the transmit power used when the first intermediate node transmits the carrier wave to the IoT device. It is understandable that the carrier wave is a type of radio wave used to carry the signal, such as a sine wave. Illustratively, the carrier wave transmitted by the first intermediate node to the IoT device does not carry data.

In some embodiments, the first power control parameter is used to indicate the transmit power used when the first intermediate node transmits the data to the IoT device. Optionally, the data includes at least one of data information or control information.

In some embodiments, the first power control parameter is used to indicate the transmit power used when the first intermediate node transmits the signal to the IoT device. Optionally, this signal may be understood as a reference signal or a pilot signal. Alternatively, this signal and the data transmitted by the first intermediate node to the IoT device occupy the same time-frequency resource unit during transmission, or are understood as being transmitted simultaneously and carried on the same transmission resource. Alternatively, this signal and the data transmitted by the first intermediate node to the IoT device occupy different time-frequency resource units during transmission, or are understood as being carried on different transmission resources, meaning that the signal and the data transmitted by the first intermediate node to the IoT device are transmitted separately. In the embodiments of the present disclosure, an example is provided where the signal and the data transmitted by the first intermediate node to the IoT device are transmitted synchronously.

In some embodiments, the first power control parameter includes at least one of the following: the open-loop power control parameter; or the closed-loop power control parameter.

Optionally, the first power control parameter is the open-loop power control parameter. This open-loop power control parameter is configured by the network device, which is beneficial for reducing the signaling overhead of the network device transmitting the closed-loop power control parameter, and also facilitates the intermediate node to flexibly adjust the transmit power. In the case where the first power control parameter is the open-loop power control parameter, the first intermediate node determines, based on the open-loop power control parameter, the transmit power used when transmitting at least one of the carrier wave, the data, or the signal to the IoT device.

Optionally, the first power control parameter is the closed-loop power control parameter. This closed-loop power control parameter can assist the network device in dynamically adjusting the transmit power of the first intermediate node. When the first power control parameter is the closed-loop power control parameter, the first intermediate node determines, based on the closed-loop power control parameter, the transmit power used when transmitting at least one of the carrier wave, the data, or the signal to the IoT device.

In some embodiments, the transmit power is the power used when the first intermediate node transmits at least one of the carrier wave, the data, or the signal to the IoT device.

In summary, in the method provided in the embodiments, by transmitting the first power control parameter to the first intermediate node, the first intermediate node determines the transmit power used when transmitting at least one of the carrier wave, the data, or the signal to the IoT device. On the one hand, it ensures the performance of the first intermediate node in transmitting at least one of the carrier wave, the data, or the signal to the IoT device. On the other hand, by controlling the transmit power, it helps reduce the interference of the first intermediate node on other data transmissions when transmitting at least one of the carrier wave, the data, or the signal.

### For the open-loop power control parameter

In some embodiments, the aforementioned step 420 may be replaced with the following sub-step.

**Step 421:** Transmitting the open-loop power control parameter.

In some embodiments, the open-loop power control parameter is configured by the network device. This open-loop power control parameter is used to instruct the first intermediate node to determine the transmit power.

In some embodiments, the open-loop power control parameter includes at least one of the following: the first maximum transmit power used when transmitting the carrier wave; the second maximum transmit power used when transmitting the data and the signal; the third maximum transmit power used when transmitting the data; the fourth maximum transmit power used when transmitting the signal; the path loss compensation factor; the basic operating point of the transmit power; the basic operating point of the transmit power based on the downlink path loss; or the basic operating point of the transmit power based on the path loss of the IoT link.

Specifically, the implementation method of the open-loop power control parameter is detailed in the embodiments specific to the open-loop power control parameter.

### For the closed-loop power control parameter

In some embodiments, the aforementioned step 420 may be replaced with the following sub-step.

**Step 422:** Transmitting the closed-loop power control parameter.

In some embodiments, the closed-loop power control parameter is indicated by the network device through the power control command. This closed-loop power control parameter is used to instruct the first intermediate node to determine the transmit power.

In some embodiments, the power control command is used to instruct the first intermediate node to determine the closed-loop power control parameter for the transmit power.

In some embodiments, the power control command includes at least one of the following: the first power control command associated with the carrier wave; the second power control command associated with both the data and the signal; the third power control command associated with the carrier wave, the data, and the signal; the fourth power control command associated with the data; or the fifth power control command associated with the signal.

Specifically, the implementation method of the closed-loop power control parameter is detailed in the embodiments specific to these parameters.

In some embodiments, when there are at least two intermediate nodes, the transmit power of the first intermediate node is determined based on the first power control parameter and the power control parameter transmitted by another intermediate node other than the first intermediate node. In the embodiments of the present disclosure, two intermediate nodes are taken as an example for illustration. FIG. 13 shows a flowchart of a method for controlling transmit power according to some exemplary embodiments of the present disclosure. This method is performed by a second intermediate terminal device/second intermediate node. The method includes the following step.

**Step 520:** Transmitting the second power control parameter.

In some embodiments, the second power control parameter includes at least one of the following: the sixth power control command; the path loss between the first intermediate node and the second intermediate node; the fifth maximum transmit power used when the first intermediate node transmits the carrier wave; the sixth maximum transmit power used when the first intermediate node transmits the data and the signal; the seventh maximum transmit power used when the first intermediate node transmits the data; or the eighth maximum transmit power used when the first intermediate node transmits the signal.

Specifically, the implementation method of the second power control parameter is detailed in step 223 mentioned above.

FIG. 14 illustrates the structural block diagram of an apparatus for controlling transmit power according to some exemplary embodiments of the present disclosure. The apparatus includes a determining module 1410.

**The determining module 1410 is configured to** determine transmit power based on the first power control parameter.

In some embodiments, the first power control parameter is transmitted by the network device to the apparatus. The first power control parameter is used to instruct the apparatus to determine the transmit power used when transmitting at least one of the carrier wave, the data, or the signal to the IoT device. In the embodiments of the present disclosure, the IoT device is exemplified as an Ambient IoT device for illustration.

In some embodiments, the first power control parameter is used to indicate the transmit power used when the apparatus transmits the carrier wave to the IoT device. It is understood that the carrier wave is a type of radio wave used to carry the signal, such as a sine wave. Illustratively, the carrier wave transmitted by the first intermediate node to the IoT device does not carry data.

In some embodiments, the first power control parameter is used to indicate the transmit power used when the apparatus transmits the data to the IoT device. Optionally, the data includes at least one of data information or control information.

In some embodiments, the first power control parameter is used to indicate the transmit power used when the apparatus transmits the signal to the IoT device. Optionally, the signal may be understood as a reference signal or a pilot signal. Alternatively, the signal and the data transmitted by the apparatus to the IoT device occupy the same time-frequency resource unit during transmission, or are understood as being transmitted simultaneously and carried on the same transmission resource. Alternatively, the signal and the data transmitted by the apparatus to the IoT device occupy different time-frequency resource units during transmission, or are understood as being carried on different transmission resources, that is, the signal and the data transmitted by the apparatus to the IoT device are transmitted separately. In the embodiments of the present disclosure, an example is given where the signal and the data transmitted by the apparatus to the IoT device are transmitted synchronously.

In some embodiments, the aforementioned apparatus further includes a receiving module 1420.

**The receiving module 1420 is configured to** receive the first power control parameter.

In some embodiments, the first power control parameter includes at least one of the following: the open-loop power control parameter; or the closed-loop power control parameter.

Optionally, the first power control parameter is the open-loop power control parameter. This open-loop power control parameter is configured by the network device, which is beneficial for reducing the signaling overhead of the network device transmitting the closed-loop power control parameter, and also beneficial for the intermediate node to flexibly adjust the transmit power. In the case where the first power control parameter is the open-loop power control parameter, the apparatus determines, based on the open-loop power control parameter, the transmit power used when transmitting at least one of the carrier wave, the data, or the signal to the IoT device.

Optionally, the first power control parameter is the closed-loop power control parameter. This closed-loop power control parameter can assist the network device in dynamically adjusting the transmit power of the apparatus. When the first power control parameter is the closed-loop power control parameter, the apparatus determines, based on the closed-loop power control parameter, the transmit power used when transmitting at least one of the carrier wave, the data, or the signal to the IoT device.

In some embodiments, the transmit power refers to the power used when the apparatus transmits at least one of the carrier wave, the data, or the signal to the IoT device.

### For the open-loop power control parameter

**The determining module 1410 is further configured to** determine the transmit power based on the open-loop power control parameter.

In some embodiments, the open-loop power control parameter is configured by the network device.

**The receiving module 1420 is also configured to** receive the open-loop power control parameter. These open-loop power control parameter includes at least one of the following: the first maximum transmit power used when transmitting the carrier wave; the second maximum transmit power used when transmitting the data and the signal; the third maximum transmit power used when transmitting the data; the fourth maximum transmit power used when transmitting the signal; the path loss compensation factor; the basic operating point of the transmit power; the basic operating point of the transmit power based on the downlink path loss; or the basic operating point of the transmit power based on the path loss of the IoT link.

Specifically, the implementation method of the open-loop power control parameter is detailed in the embodiments specific to open-loop power control parameter.

### For the closed-loop power control parameter

**The determining module 1410 is further configured to** determine the transmit power based on the closed-loop power control parameter.

In some embodiments, the closed-loop power control parameter is indicated by the network device through the power control command.

**The receiving module 1420 is also configured to** receive the power control command. This power control command is used to instruct the apparatus to determine the closed-loop power control parameter for the transmit power.

In some embodiments, the power control command includes at least one of the following: the first power control command associated with the carrier wave; the second power control command associated with both the data and the signal; the third power control command associated with the carrier wave, the data, and the signal; the fourth power control command associated with the data; or the fifth power control command associated with the signal.

Specifically, the implementation method of the closed-loop power control parameter is detailed in the embodiments specific to the closed-loop power control parameter.

In some embodiments, when there are at least two intermediate nodes, the transmit power of the apparatus is determined based on the first power control parameter and the power control parameter transmitted by another intermediate node other than the apparatus itself. In the embodiments of the present disclosure, two intermediate nodes are taken as an example for illustration.

**The determining module 1410 is further configured to** determine the transmit power based on the first power control parameter and the second power control parameter transmitted by the second intermediate node.

In some embodiments, the apparatus further includes an adjusting module 1430.

**The adjusting module 1430 is configured to** adjust the transmit power based on the first power control parameter and the second power control parameter transmitted by the second intermediate node.

In some embodiments, the first power control parameter is described in detail in steps 220 to 222 mentioned above.

In some embodiments, the second power control parameter transmitted by the second intermediate node includes at least one of the following: the sixth power control command; the path loss between the apparatus and the second intermediate node; the fifth maximum transmit power used when the apparatus transmits the carrier wave; the sixth maximum transmit power used when the apparatus transmits the data and the signal; the seventh maximum transmit power used when the apparatus transmits the data; or the eighth maximum transmit power used when the apparatus transmits the signal.

Specifically, the implementation method of the second power control parameter is detailed in step 223 mentioned above.

In some embodiments, the apparatus further includes a transmitting module 1440.

**The transmitting module 1440 is configured to** transmit at least one of the carrier waves, the data, or the signal.

It should be noted that the apparatus provided in the above embodiments is exemplified solely based on the division of the various functional modules when achieving its functions. In practical applications, the aforementioned functions can be allocated to different functional modules according to actual needs, that is, the content structure of the apparatus can be divided into different functional modules to fulfill all or part of the functions described above.

FIG. 15 shows a structural block diagram of an apparatus for controlling transmit power according to some exemplary embodiments of the present disclosure. The apparatus includes a transmitting module 1510.

**The transmitting module 1510 is configured to** transmit the first power control parameter.

In some embodiments, the first power control parameter is transmitted by the apparatus to the first intermediate node. The first power control parameter is used to instruct the first intermediate node to determine the transmit power used when transmitting at least one of the carrier wave, the data, or the signal to the IoT device. In the embodiments of the present disclosure, the IoT device is exemplified as an Ambient IoT device for illustration.

In some embodiments, the first power control parameter is used to indicate the transmit power used when the first intermediate node transmits the carrier wave to the IoT device. It is understandable that the carrier wave is a type of radio wave used to the carry signal, such as a sine wave. For example, the carrier wave transmitted by the first intermediate node to the IoT device does not carry data.

In some embodiments, the first power control parameter is used to indicate the transmit power used when the first intermediate node transmits the data to the IoT device. Optionally, the data includes at least one of data information or control information.

In some embodiments, the first power control parameter is used to indicate the transmit power used when the first intermediate node transmits the signal to the IoT device. Optionally, this signal may be understood as a reference signal or a pilot signal. Alternatively, this signal may occupy the same time-frequency resource unit as the data transmitted by the first intermediate node to the IoT device during transmission, or be understood as being carried on the same transmission resource simultaneously with the data transmitted by the first intermediate node to the IoT device. Alternatively, this signal may occupy different time-frequency resource units from the data transmitted by the first intermediate node to the IoT device during transmission, or be understood as being carried on different transmission resources, that is, the signal and the data transmitted by the first intermediate node to the IoT device are transmitted separately. In the embodiments of the present disclosure, an example is provided where the signal and the data transmitted by the first intermediate node to the IoT device are transmitted synchronously.

In some embodiments, the first power control parameter includes at least one of the following: the open-loop power control parameter; or the closed-loop power control parameter.

Optionally, the first power control parameter is the open-loop power control parameter. This open-loop power control parameter is configured for the apparatus, which is beneficial for reducing the signaling overhead of the apparatus transmitting the closed-loop power control parameter, and also facilitates the intermediate node to flexibly adjust the transmit power. In the case where the first power control parameter is the open-loop power control parameter, the first intermediate node determines, based on the open-loop power control parameter, the transmit power used when transmitting at least one of the carrier wave, the data, or the signal to the IoT device.

Optionally, the first power control parameter is the closed-loop power control parameter. This closed-loop power control parameter can assist the apparatus in dynamically adjusting the transmit power of the first intermediate node. In the case where the first power control parameter is the closed-loop power control parameter, the first intermediate node determines, based on the closed-loop power control parameter, the transmit power used when transmitting at least one of the carrier wave, the data, or the signal to the IoT device.

In some embodiments, the transmit power is the power used when the first intermediate node transmits at least one of the carrier wave, the data, or the signal to the IoT device.

### For the open-loop power control parameter

**The transmitting module 1510 is also configured to** transmit the open-loop power control parameter.

In some embodiments, the open-loop power control parameter is configured by the apparatus. The open-loop power control parameter is configured to instruct the first intermediate node to determine the transmit power.

In some embodiments, the open-loop power control parameter includes at least one of the following: the first maximum transmit power used when transmitting the carrier wave; the second maximum transmit power used when transmitting the data and the signal; the third maximum transmit power used when transmitting the data; the fourth maximum transmit power used when transmitting the signal; the path loss compensation factor; the basic operating point of the transmit power; the basic operating point of the transmit power based on the downlink path loss; or the basic operating point of the transmit power based on the path loss of the IoT link.

Specifically, the implementation method of the open-loop power control parameter is detailed in the embodiments specific to the open-loop power control parameter.

### For the closed-loop power control parameter

**The transmitting module 1510 is also configured to** transmit the closed-loop power control parameter.

In some embodiments, the closed-loop power control parameter is indicated by the apparatus through the power control command. The closed-loop power control parameter is used to instruct the first intermediate node to determine the transmit power.

In some embodiments, the power control command is used to instruct the first intermediate node to determine the closed-loop power control parameter for the transmit power.

In some embodiments, the power control command includes at least one of the following: the first power control command associated with the carrier wave; the second power control command associated with the data and the signal; the third power control command associated with the carrier wave, the data, and the signal; the fourth power control module associated with the data; or the fifth power control module associated with the signal.

Specifically, the implementation method of the closed-loop power control parameter is detailed in the embodiments specific to the closed-loop power control parameter.

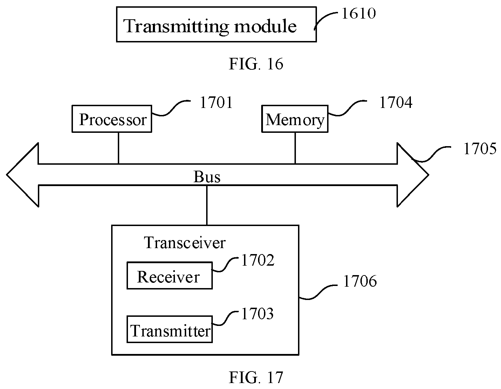

FIG. 16 illustrates the structural block diagram of an apparatus for controlling transmit power according to some exemplary embodiments of the present disclosure. The apparatus includes:

**The transmitting module 1610 is configured to** transmit the second power control parameter.

In some embodiments, the second power control parameter includes at least one of the following: the sixth power control command; the path loss between the first intermediate node and the apparatus; the fifth maximum transmit power used when the first intermediate node transmits the carrier wave; the sixth maximum transmit power used when the first intermediate node transmits the data and the signal; the seventh maximum transmit power used when the first intermediate node transmits the data; or the eighth maximum transmit power used when the first intermediate node transmits the signal.

Specifically, the implementation method of the second power control parameter is detailed in step 223 mentioned above.

FIG. 17 illustrates the schematic structural diagram of a communication device (terminal device or network device) according to some embodiments of the present disclosure. The communication device may include: a processor 1701, a receiver 1702, a transmitter 1703, a memory 1704, and a bus 1705.

The processor 1701 includes one or more processing cores, and it executes various functional applications and information processing by running software programs and modules.

The receiver 1702 and the transmitter 1703 may be implemented as a transceiver 1706, which can be a communication chip.

The memory 1704 is connected to the processor 1701 via the bus 1705. The memory 1704 may be used to store computer programs, and the processor 1701 is used to run these computer programs, thereby implementing the various steps performed by the terminal device or network device in the aforementioned method embodiments.

In addition, the memory 1704 may be implemented by any type of volatile or non-volatile storage device, or a combination thereof. Volatile or non-volatile storage devices include, but are not limited to: random-access memory (RAM), read-only memory (ROM), erasable programmable read-only memory (EPROM), electrically erasable programmable read-only memory (EEPROM), flash memory, or other solid-state storage technologies, compact disc read-only memory (CD-ROM), digital video disc (DVD), or other optical storage, magnetic tape cartridges, magnetic tapes, disk storage, or other magnetic storage devices.

The embodiments of the present disclosure further provide a computer-readable storage medium, in which computer programs are stored. The computer programs are run by a processor of a terminal device or a network device to perform steps of the method for controlling transmit power described above.

In some embodiments, the computer-readable storage medium may include: ROM, RAM, solid state drives (SSD), or optical discs, etc. The RAM may include resistance random access memory (ReRAM) and dynamic random access memory (DRAM).

The embodiments of the present disclosure further provide a chip, which includes programmable logic circuitry and/or program instructions. When the chip operates on a terminal or network device, it is configured to perform steps of the aforementioned method for controlling transmit power.

The embodiments of the present disclosure further provide a computer program product or computer program, which includes computer instructions stored in a computer-readable storage medium. The processor of a terminal device or network device reads and executes the computer instructions from the computer-readable storage medium to perform steps of the above-mentioned method for controlling transmit power.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for controlling transmit power, performed by a first intermediate node, the method comprising:
determining transmit power based on a first power control parameter, wherein the transmit power is power used when transmitting at least one of a carrier wave, data, or a signal to an Internet of things device.

2. The method according to claim 1, wherein determining the transmit power based on the first power control parameter comprises:
determining the transmit power based on an open-loop power control parameter.

3. The method according to claim 2, wherein the open-loop power control parameter comprises at least one of:
first maximum transmit power used when transmitting the carrier wave; second maximum transmit power used when transmitting the data and the signal; third maximum transmit power used when transmitting the data; fourth maximum transmit power used when transmitting the signal; a path loss compensation factor; a basic operating point of the transmit power; a basic operating point of the transmit power based on downlink path loss; or a basic operating point of the transmit power based on path loss of an Internet of things link, wherein the Internet of things link is a link between the first intermediate node and the Internet of things device.

4. The method according to claim 2 or 3, wherein the open-loop power control parameter is configured by a network device.

5. The method according to claim 1, wherein determining the transmit power based on the first power control parameter comprises:
determining the transmit power based on a closed-loop power control parameter.

6. The method according to claim 5, wherein the closed-loop power control parameter is indicated by a network device through a power control command.

7. The method according to claim 6, wherein the power control command comprises at least one of:
a first power control command associated with the carrier wave; a second power control command associated with the data and the signal; a third power control command associated with the carrier wave, the data, and the signal; a fourth power control command associated with the data; or a fifth power control command associated with the signal.

8. The method according to claim 7, wherein
the first power control command is carried in first downlink control information (DCI), and the second power control command is carried in second DCI; or
the first power control command and the second control command are carried in third DCI; or
the third power control command is carried in third DCI;
wherein the first DCI is DCI used for scheduling transmission of the carrier wave, the second DCI is DCI used for scheduling transmission of the data or the signal, and the third DCI is DCI used for scheduling transmission of the carrier wave or the data or the signal.

9. The method according to claim 8, wherein,
the first power control command is carried in a first block number in fourth DCI, and the second power control command is carried in a second block number in fifth DCI; or
the first power control command or the second control command is carried in a third block number in sixth DCI; or
the third power control command is carried in a third block number in sixth DCI;
wherein the fourth DCI, the fifth DCI, and the sixth DCI are DCI dedicated to transmission of a power control command.

10. The method according to claim 9, wherein the third block number comprises an indication bit, wherein
in a case where the indication bit takes a first value, another bit in the third block number other than the indication bit carries the first power control command; or
in a case where the indication bit takes a second value, another bit in the third block number other than the indication bit carries the second power control command.

11. The method according to claim 9, wherein the fourth DCI and the fifth DCI are scrambled using different radio network temporary identifiers (RNTIs).

12. The method according to claim 9, wherein a radio network temporary identifier (RNTI) used for scrambling any one of the fourth DCI, the fifth DCI, or the sixth DCI is different from a transmit power control (TPC)-physical uplink shared channel (PUSCH)-RNTI and a TPC-physical uplink control channel (PUCCH)-RNTI.

13. The method according to claim 9, wherein numbers of bits of the first block number, the second block number, and the third block number are configured by the network device.

14. The method according to claim 1, wherein determining the transmit power based on the first power control parameter comprises:
determining the transmit power based on the first power control parameter and a second power control parameter transmitted by a second intermediate node.

15. The method according to claim 1, further comprising:
adjusting the transmit power based on a second power control parameter transmitted by a second intermediate node.

16. The method according to claim 14 or 15, wherein the second power control parameter transmitted by the second intermediate node comprises at least one of:
a sixth power control command; path loss between the first intermediate node and the second intermediate node; fifth maximum transmit power used when the first intermediate node transmits the carrier wave; sixth maximum transmit power used when the first intermediate node transmits the data and the signal; seventh maximum transmit power used when the first intermediate node transmits the data; or eighth maximum transmit power used when the first intermediate node transmits the signal.

17. A method for controlling transmit power, performed by a network device, the method comprising:
transmitting a first power control parameter, wherein the first power control parameter is used to instruct a first intermediate node to determine transmit power, wherein the transmit power is power used when the first intermediate node transmits at least one of a carrier wave, data, or a signal to an Internet of things device.

18. The method according to claim 17, wherein transmitting the first power control parameter comprises:
transmitting an open-loop power control parameter, wherein the open-loop power control parameter is used to instruct the first intermediate node to determine the transmit power.

19. The method according to claim 18, wherein the open-loop power control parameter comprises at least one of: first maximum transmit power used when the first intermediate node transmits the carrier wave; second maximum transmit power used when the first intermediate node transmits both the data and the signal; third maximum transmit power used when the first intermediate node transmits the data; fourth maximum transmit power used when the first intermediate node transmits the signal; a path loss compensation factor; a basic operating point of the transmit power; a basic operating point of the transmit power based on downlink path loss; or a basic operating point of the transmit power based on path loss of an Internet of things link, wherein the Internet of things link is a link between the first intermediate node and the Internet of things device.

20. The method according to claim 18, wherein the open-loop power control parameter is configured by the network device.

21. The method according to claim 17, wherein transmitting the first power control parameter comprises:
transmitting a closed-loop power control parameter, wherein the closed-loop power control parameter is used to instruct the first intermediate node to determine the transmit power.

22. The method according to claim 21, wherein the closed-loop power control parameter is indicated by the network device through a power control command.

23. The method according to claim 22, wherein the power control command comprises at least one of:
a first power control command associated with the carrier wave; a second power control command associated with the data and the signal; a third power control command associated with the carrier wave, the data, and the signal; a fourth power control command associated with the data; or a fifth power control command associated with the signal.

24. The method according to claim 23, wherein
the first power control command is carried in first downlink control information (DCI), and the second power control command is carried in second DCI; or
the first power control command and the second control command are carried in third DCI; or
the third power control command is carried in third DCI;
wherein the first DCI is DCI used for scheduling transmission of the carrier wave, the second DCI is DCI used for scheduling transmission of the data or the signal, and the third DCI is DCI used for scheduling transmission of the carrier wave or the data or the signal.

25. The method according to claim 24, wherein the first power control command is carried in a first block number in fourth DCI, and the second power control command is carried in a second block number in fifth DCI; or
the first power control command or the second control command is carried in a third block number in sixth DCI; or
the third power control command is carried in a third block number in sixth DCI;
wherein the fourth DCI, the fifth DCI, and the sixth DCI are DCI dedicated to transmission of a power control command.

26. The method according to claim 25, wherein the third block number comprises an indication bit, wherein
in a case where the indication bit takes a first value, another bit in the third block number other than the indication bit carries the first power control command; or
in a case where the indication bit takes a second value, another bit in the third block number other than the indication bit carries the second power control command.

27. The method according to claim 25, wherein the fourth DCI and the fifth DCI are scrambled using different radio network temporary identifiers (RNTIs).

28. The method according to claim 25, wherein a radio network temporary identifier (RNTI) used for scrambling any one of the fourth DCI, the fifth DCI, or the sixth DCI is different from a transmit power control (TPC)-physical uplink shared channel (PUSCH)-RNTI and a TPC-physical uplink control channel (PUCCH)-RNTI.

29. The method according to claim 25, wherein numbers of bits of the first block number, the second block number, and the third block number are configured by the network device.

30. A method for controlling transmit power, performed by a second intermediate node, the method comprising:
transmitting a second power control parameter, wherein the second power control parameter is used to determine transmit power of a first intermediate node together with a first power control parameter, or the second power control parameter is used to adjust transmit power determined based on a first power control parameter;
wherein the transmit power is power used when the first intermediate node transmits at least one of a carrier wave, data, or a signal to an Internet of things device.

31. The method according to claim 30, wherein the second power control parameter comprises at least one of: a sixth power control command; path loss between the first intermediate node and the second intermediate node; fifth maximum transmit power used when the first intermediate node transmits the carrier wave; sixth maximum transmit power used when the first intermediate node transmits the data and the signal; seventh maximum transmit power used when the first intermediate node transmits the data; or eighth maximum transmit power used when the first intermediate node transmits the signal.

32. An apparatus for controlling transmit power, comprising:
a determining module, configured to determine transmit power based on a first power control parameter, wherein the transmit power is power used when transmitting at least one of a carrier wave, data, or a signal to an Internet of things device.

33. An apparatus for controlling transmit power, comprising:
a transmitting module, configured to transmit a first power control parameter, wherein the first power control parameter is used to instruct a first intermediate node to determine transmit power, wherein the transmit power is power used when the first intermediate node transmits at least one of a carrier wave, data, or a signal to an Internet of things device.

34. An apparatus for controlling transmit power, comprising:
a transmitting module, configured to transmit a second power control parameter, wherein the second power control parameter is used to determine transmit power of a first intermediate node together with a first power control parameter, or the second power control parameter is used to adjust transmit power determined based on a first power control parameter;
wherein the transmit power is power used when the first intermediate node transmits at least one of a carrier wave, data, or a signal to an Internet of things device.

35. A terminal device, comprising: a processor; wherein the processor is configured to determine transmit power based on a first power control parameter, wherein the transmit power is power used when transmitting at least one of a carrier wave, data, or a signal to an Internet of things device.

36. A terminal device, comprising: a processor and a transceiver connected to the processor; wherein the transceiver is configured to transmit a second power control parameter, wherein the second power control parameter is used to determine transmit power of a first intermediate node together with a first power control parameter, or the second power control parameter is used to adjust transmit power determined based on a first power control parameter;
wherein the transmit power is power used when the first intermediate node transmits at least one of a carrier wave, data, or a signal to an Internet of things device.

37. A network device, comprising: a processor and a transceiver connected to the processor; wherein the transceiver is configured to transmit a first power control parameter, wherein the first power control parameter is used to instruct a first intermediate node to determine transmit power, wherein the transmit power is power used when the first intermediate node transmits at least one of a carrier wave, data, or a signal to an Internet of things device.

38. A computer-readable storage medium, wherein one or more computer programs are stored in the storage medium, and are run by a processor to perform the method for controlling transmit power according to any one of claims 1 to 31.

39. A chip, comprising: programmable logic circuitry and/or one or more program instructions, and the chip, when operating on a terminal or network device, is configured to perform the method for controlling transmit power according to any one of claims 1 to 31.

40. A computer program product, comprising: one or more computer instructions stored in a computer-readable storage medium; and a processor of a communication device reads the one or more computer instructions from the computer-readable storage medium and executes the one or more computer instructions, such that the communication device performs the method for controlling transmit power according to any one of claims 1 to 31.

41. A computer program, wherein the computer program is run by a processor of a communication device to perform the method for controlling transmit power according to any one of claims 1 to 31.
